# FASCICULE DE BREVET EUROPEEN

(11) **EP 0 963 341 B1**
(45) Date de publication et mention de la délivrance du brevet: **30.05.2001**
(21) Numéro de dépôt: 98963635.2
(22) Date de dépôt: 24.12.1998
(51) Int. Cl.: C01B 17/04, B01J 27/04

(54) **PROCEDE ET CATALYSEUR POUR OXIDER DIRECTEMENT EN SOUFRE L'H2S CONTENU DANS UN GAZ**
VERFAHREN UND KATALYSATOR ZUR DIREKTEN OXIDATION VON H2S AUS GASSTRÖMEN IN SCHWEFEL
METHOD AND CATALYST FOR DIRECT SULPHUR OXIDATION OF H2S CONTAINED IN A GAS

(30) Priorité: 29.12.1997 FR 9716617
(43) Date de publication de la demande: 15.12.1999
(73) Titulaire: Elf Exploration Production, 92400 Courbevoie (FR)
(72) Inventeur: LEDOUX, Marc, F-67000 Strasbourg (FR); NOUGAYREDE, Jean, F-64000 Pau (FR); SAVIN-PONCET, Sabine, F-64160 Buros (FR); PHAM HUU, Cuong, F-67700 Saverne (FR); KELLER, Nicolas, F-67100 Strasbourg (FR); CROUZET, Claude, F-67000 Strasbourg (FR)
(74) Mandataire: Cabinet Hirsch
(86) Numéro de dépôt international: FR9802879
(87) Numéro de publication internationale: WO9933748

(56) Documents cités:
- FR-A- 2 727 101
- GB-A- 2 088 903
- US-A- 4 937 221
- US-A- 5 653 953

## Description

L'invention a trait à un procédé catalytique pour oxyder directement en soufre, à basse température, l'H₂S contenu en faible concentration dans un gaz. Elle concerne encore un catalyseur pour la mise en oeuvre de ce procédé.

Pour récupérer l'H₂S contenu en faible concentration, à savoir concentration inférieure à 20 % en volume et plus particulièrement comprise entre 0,001 % et 20 % et tout spécialement allant de 0,001 % à 10 % en volume, dans des gaz de provenances diverses, on peut faire appel, notamment, à des procédés mettant en oeuvre une oxydation catalytique directe de l'H₂S en soufre selon la réaction H₂S + 1/2 O₂ 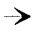 S + H₂O.

Dans de tels procédés, on fait passer le gaz à traiter renfermant l'H₂S en mélange avec une quantité appropriée d'un gaz contenant de l'oxygène libre, par exemple, air, oxygène ou encore air enrichi en oxygène, au contact d'un catalyseur d'oxydation de l'H₂S en soufre en réalisant ce contact à des températures soit supérieures au point de rosée du soufre formé, auquel cas le soufre formé est présent à l'état de vapeur dans le milieu réactionnel issu de la réaction, ou bien à des températures inférieures au point de rosée du soufre formé, auquel cas ledit soufre se dépose sur le catalyseur, ce qui nécessite de régénérer périodiquement le catalyseur chargé de soufre par balayage au moyen d'un gaz non oxydant ayant une température comprise entre 200 °C et 500 °C.

En particulier, l'oxydation de l'H₂S en soufre à des températures supérieures au point de rosée du soufre, c'est-à-dire à des températures supérieures à environ 180 °C, peut être réalisée au contact d'un catalyseur consistant en oxyde de titane (EP-A-0078690), en oxyde de titane renfermant un sulfate de métal alcalino-terreux (WO-A-8302068), en oxyde de titane renfermant de l'oxyde de nickel et éventuellement de l'oxyde d'aluminium (EP-A-0140045), en un oxyde du type oxyde de titane, oxyde de zirconium ou silice associé à un ou plusieurs composés de métaux de transition choisis parmi Fe, Cu, Zn, Cd, Cr, Mo, W, Co et Ni, de préférence Fe, et éventuellement à un ou plusieurs composés de métaux précieux choisis parmi Pd, Pt, Ir et Rh, de préférence Pd (FR-A-2511663), ou encore en une alumine stabilisée thermiquement et associée à un ou plusieurs composés de métaux de transition tels que précités, notamment Fe, et éventuellement à un ou plusieurs composés de métaux précieux choisis parmi Pd, Pt, Ir et Rh (FR-A-2540092).

L'oxydation de l'H₂S en soufre en opérant à des températures telles que le soufre formé se dépose sur le catalyseur peut être effectuée, quant à elle, au contact d'un catalyseur consistant, par exemple, en un ou plusieurs composés tels que sels,oxydes ou sulfures de métaux de transition,par exemple Fe, Cu, Cr, Mo, W, V, Co, Ni, Ag et Mn, en association avec un support de type alumine activée, bauxite, silice/alumine ou zéolithe (FR-A-2277877). On peut encore réaliser cette oxydation de l'H₂S avec dépôt de soufre sur le catalyseur au contact d'un catalyseur consistant en une phase catalytique choisie parmi les oxydes, sels ou sulfures des métaux V, Mo, W, Ni et Co associée à un support en charbon actif (demande de brevet français n° 9302996 du 16.03.1993).

Les catalyseurs tels que précités constitués d'une phase catalytique à base d'au moins un oxyde, sel ou sulfure d'un métal de transition associée à un support consistant en au moins un matériau choisi parmi l'alumine, l'oxyde de titane, l'oxyde de zirconium, la silice, les zéolithes, les mélanges silice/alumine, les mélanges silice/oxyde de titane et le charbon actif, qui sont utilisés pour l'oxydation catalytique de l'H₂S en soufre, présentent encore certaines insuffisances à l'usage prolongé. En particulier, les catalyseurs dont le support est à base d'alumine sont susceptibles d'évoluer dans le temps par sulfatation. En ce qui concerne les catalyseurs dont le support consiste en charbon actif, des précautions doivent être prises lors de leur mise en oeuvre pour éviter la combustion du support. De plus, pour ces divers catalyseurs, la phase catalytique imprégnant le support a tendance à migrer dans la maille du support, ce qui rend difficile voire même souvent impossible la récupération du métal de la phase catalytique dans le catalyseur usé. Enfin, les catalyseurs précités ont une conductibilité thermique médiocre, ce qui ne permet pas de réaliser un contrôle efficace de la température au sein des lits catalytiques les contenant par un échange thermique avec un fluide de refroidissement.

Afin de remédier aux inconvénients des catalyseurs du type mentionné plus haut, qui sont utilisés dans les procédés d'oxydation catalytique de l'H₂S en soufre et ainsi d'obtenir un procédé conduisant à une sélectivité améliorée en soufre se maintenant d'une manière durable dans le temps, la demanderesse, dans les citations FR-A-2727101 et WO-A-9719019, a proposé de réaliser l'oxydation directe de l'H₂S en soufre au contact d'un catalyseur formé d'un support en carbure de silicium associé à une phase catalytiquement active renfermant au moins un métal de transition, notamment Ni, Co, Fe, Cu, Ag, Mn, Mo, Cr, Ti, W et V, sous la forme d'oxyde ou de sel ou/et à l'état élémentaire.

En particulier, les citations FR-A-2727101 et WO-A-9719019 décrivent une mise en oeuvre du procédé d'oxydation directe de l'H₂S en soufre au contact du catalyseur à support de carbure de silicium, dans laquelle on effectue ladite oxydation à des températures inférieures au point de rosée du soufre formé par cette oxydation, lequel soufre se dépose sur le catalyseur, puis on soumet périodiquement le catalyseur d'oxydation chargé de soufre à une régénération par balayage à l'aide d'un gaz non oxydant, en opérant à des températures comprises entre 200°C et 500°C et de préférence entre 230°C et 450°C, pour vaporiser le soufre retenu sur le catalyseur, et ensuite on refroidit le catalyseur régénéré jusqu'à la température, inférieure au point de rosée du soufre, requise pour une nouvelle mise en oeuvre de l'oxydation de l'H₂S, ce refroidissement étant réalisé au moyen d'un gaz ayant une température inférieure à 180°C.

En poursuivant ses recherches, la demanderesse a trouvé que l'on pouvait encore améliorer l'activité désulfurante et la sélectivité en soufre du catalyseur à support de carbure de silicium dans le procédé régénératif précité, mis en oeuvre à des températures inférieures au point de rosée du soufre produit, en effectuant l'oxydation de l'H₂S en soufre avec une phase active dudit catalyseur, qui renferme un ou plusieurs oxysulfures de certains des métaux de transition mentionnés plus haut et qui, dans une forme de réalisation préférée, est restaurée, par un traitement particulier, avant chaque nouvelle phase d'oxydation de l'H₂S.

L'invention a donc pour objet un procédé régénératif pour oxyder directement en soufre, par voie catalytique, l'H₂S contenu en faible concentration dans un gaz, ledit procédé étant du type dans lequel on fait passer ledit gaz renfermant H₂S avec un gaz renfermant de l'oxygène libre, en quantité propre à fournir un rapport molaire O₂ : H₂S allant de 0,05 à 15, au contact d'un catalyseur d'oxydation sélective de l'H₂S en soufre, qui est constitué d'une phase catalytiquement active associée à un support en carbure de silicium et consistant en un composé d'au moins un métal de transition, en opérant à des températures inférieures au point de rosée du soufre formé par l'oxydation de l'H₂S, lequel soufre se dépose sur le catalyseur, puis on soumet périodiquement le catalyseur d'oxydation chargé de soufre à une régénération par balayage à l'aide d'un gaz non oxydant, en opérant à des températures comprises entre 200°C et 500°C et de préférence entre 230°C et 450°C, pour vaporiser le soufre retenu sur le catalyseur, et ensuite on refroidit le catalyseur régénéré jusqu'à la température inférieure au point de rosée du soufre requise pour une nouvelle mise en oeuvre de l'oxydation de l'H₂S, ce refroidissement étant réalisé au moyen d'un gaz ayant une température inférieure à 180°C, et il se caractérise en ce que la phase active du catalyseur renferme au moins un oxysulfure d'au moins un métal choisi parmi nickel, fer, cobalt, cuivre, chrome, molybdène et tungstène.

Comme indiqué ci-dessus, la réaction d'oxydation de l'H₂S en soufre est mise en oeuvre à des températures inférieures au point de rosée du soufre produit et plus particulièrement à des températures comprises entre 30°C et 180°C. Selon une forme de réalisation préférée, la réaction d'oxydation de l'H₂S en soufre est effectuée à des températures comprises entre 35°C et 70°C et plus particulièrement allant de 40°C à 65°C.

Dans cette forme de réalisation préférée, le gaz renfermant H₂S est amené au contact du catalyseur d'oxydation avec une température comprise entre 35°C et 70°C et plus particulièrement entre 40°C et 65°C, ladite température étant avantageusement inférieure ou égale à la température choisie pour la réaction d'oxydation de l'H₂S en soufre.

Selon une autre forme préférée de mise en oeuvre, le catalyseur régénéré est ensuite mis en contact, à des températures inférieures à 250°C et pendant une durée comprise entre 0,2 heure et 3 heures, avec un courant gazeux oxygéné constitué d'un gaz vecteur inerte renfermant, en volume,0,1% à 3% d'oxygène et 0% à 50% d'eau, pour restaurer la phase oxysulfure métallique du catalyseur.

La phase active du catalyseur d'oxydation, comptée en poids de métal, représente le plus souvent 0,1 à 20 %, plus particulièrement 0,2 à 15 % et plus spécialement 0,2 à 7 % du poids dudit catalyseur.

Le support en carbure de silicium constitue avantageusement au moins 40 % et plus particulièrement au moins 50 % du poids du catalyseur d'oxydation.

La surface spécifique du catalyseur d'oxydation de l'H₂S en soufre peut varier assez largement selon les conditions de mise en oeuvre du procédé d'oxydation. Avantageusement, ladite surface spécifique, déterminée par la méthode BET d'absorption d'azote à la température de l'azote liquide (norme NF X 11-621), peut représenter 0,1 m²/g à 600 m²/g et plus spécialement 2 m²/g à 300 m²/g.

Le catalyseur d'oxydation à support de carbure de silicium peut être préparé en opérant, par exemple, comme suit. On réalise tout d'abord une imprégnation du support, se présentant sous la forme de poudre, de pastilles, de granulés, d'extrudés ou autres formes d'agglomérés, au moyen d'une solution ou d'un sol, dans un solvant tel que l'eau, du métal ou des métaux désirés sous la forme de sels, puis on sèche le support ainsi imprégné et calcine le produit séché à des températures pouvant aller de 250 °C à 500 °C, en opérant ou non en atmosphère inerte. Le catalyseur calciné est ensuite soumis à un traitement de sulfuration par mise en contact avec un agent sulfurant consistant en soufre élémentaire ou en un mélange gazeux d'H₂S et d'un gaz inerte, en opérant à des températures comprises entre 250°C et 400°C et pendant une durée suffisante pour effectuer une sulfuration maximale du métal ou des métaux de la phase active du catalyseur. Le catalyseur sulfuré est ensuite mis en contact, à des températures inférieures à 250°C et notamment comprises entre 30°C et 200°C et pendant une durée comprise entre 0,2 heure et 3 heures et plus spécialement entre 0,5 heure et 2 heures, avec un courant gazeux oxygéné constitué d'un gaz vecteur inerte renfermant, en volume,0,1% à 3%, plus spécialement 0,3% à 1,5%, d'oxygène et 0% à 50%, plus spécialement 0,5% à 30%, d'eau, pour former la phase oxysulfure métallique. La quantité de soufre élémentaire, utilisée pour la sulfuration du support imprégné calciné, représente avantageusement un léger excès, par exemple excès allant jusqu'à 300% molaire, par rapport à la quantité stoechiométrique correspondant à une sulfuration maximale du métal ou des métaux de la phase active du catalyseur. La durée du traitement de sulfuration par le soufre élémentaire est avantageusement comprise entre 0,5 heure et 4 heures. Le mélange gazeux d'H₂S et de gaz inerte utilisé comme agent sulfurant renferme avantageusement entre 0,2% et 30% d'H₂S en volume. La durée du traitement de sulfuration par le mélange gazeux renfermant H₂S est généralement comprise entre 0,5 heure et 15 heures.

Le carbure de silicium utilisé pour constituer le support du catalyseur d'oxydation de l'H₂S en soufre, peut consister en l'un quelconque des carbures de silicium connus sous réserve qu'il présente les caractéristiques requises de surface spécifique, à savoir une surface spécifique, déterminée par la méthode BET d'adsorption d'azote, allant de 0,1 m²/g à 600 m²/g.

En particulier, ledit carbure de silicium peut être préparé en faisant appel à l'une quelconque des techniques, qui sont décrites dans les citations EP-A-0313480 (correspondant à US-A-4914070), EP-A-0440569, EP-A-0511919, EP-A-0543751 et EP-A-0543752.

Le gaz renfermant de l'oxygène libre utilisé pour l'oxydation, en soufre, de l'H₂S contenu dans le gaz à traiter est généralement de l'air, bien qu'il soit possible d'employer de l'oxygène pur, de l'air enrichi en oxygène ou encore des mélanges, en proportions variées, d'oxygène et d'un gaz inerte autre que l'azote.

Le gaz renfermant de l'oxygène libre et le gaz à traiter renfermant de l'H₂S peuvent être amenés séparément au contact du catalyseur d'oxydation. Toutefois, en vue d'obtenir un milieu réactionnel gazeux très homogène lors du contact avec le catalyseur, il est préférable de mélanger tout d'abord le gaz à traiter renfermant l'H₂S avec le gaz renfermant de l'oxygène libre et d'amener le mélange ainsi réalisé au contact du catalyseur d'oxydation.

Comme indiqué plus haut, le gaz renfermant de l'oxygène libre est utilisé en quantité propre à fournir un rapport molaire O₂ : H₂S allant de 0,05 à 15, plus particulièrement de 0,1 à 10 et tout spécialement de 0,1 à 4 dans le milieu réactionnel arrivant au contact du catalyseur d'oxydation de l'H₂S en soufre.

Les temps de contact du milieu réactionnel gazeux avec le catalyseur d'oxydation peuvent aller de 0,5 seconde à 20 secondes et de préférence de 1 seconde à 12 secondes, ces valeurs étant données dans les conditions normales de pression et de température.

Le gaz renfermant de l'H₂S en faible concentration, que l'on traite par le procédé selon l'invention, peut avoir des origines diverses. En particulier, un tel gaz peut être un gaz naturel à faible teneur en H₂S ou encore un gaz provenant de la gazéification du charbon ou des huiles lourdes, voire même un gaz résultant de l'hydrogénation d'un gaz résiduaire, par exemple un gaz résiduaire d'usine à soufre, renfermant des composés soufrés tels que SO₂, mercaptans, COS, CS₂ convertibles en H₂S sous l'action de l'hydrogène ou de la vapeur d'eau, ou bien encore un gaz résultant du traitement, au contact d'un catalyseur CLAUS susceptible de promouvoir la réaction de formation de soufre entre H₂S et SO₂, d'un effluent gazeux renfermant H₂S et SO₂ dans un rapport molaire H₂S : SO₂ supérieur à 2 : 1 et tel que ledit gaz résultant contienne surtout H₂S et pas ou très peu de SO₂ comme composés soufrés. Le procédé selon l'invention peut s'appliquer au traitement de gaz renfermant H₂S en concentration comprise entre 0,001 % et 25 % en volume et plus spécialement allant de 0,01 % à 20 % en volume. Le gaz à traiter peut encore renfermer des composés organiques du soufre tels que mercaptans, COS, CS₂, en concentration globale pouvant aller jusqu'à environ 1 % en volume. On pourrait, en utilisant le procédé selon l'invention, traiter des gaz renfermant H₂S en concentration supérieure à 25 % en volume, toutefois dans ce cas on utilise de préférence les procédés conventionnels de production de soufre comportant une étape de réaction thermique.

Le gaz renfermant H₂S, que l'on soumet à l'oxydation au contact du catalyseur à support de carbure de silicium, peut être exempt d'eau ou substantiellement exempt d'eau ou au contraire renfermer une quantité d'eau plus ou moins grande. Ainsi, on peut traiter selon l'invention un gaz renfermant H₂S qui a une teneur en eau pouvant aller de 0 % à environ 50 % en volume. Avantageusement, surtout lorsque la phase active du catalyseur à support de carbure de silicium est un oxysulfure de nickel , la présence, dans le gaz à traiter renfermant H₂S, d'une quantité d'eau allant de 10 % à 50 % en volume et plus spécialement de 15 % à 30 % en volume permet d'augmenter substantiellement la durée pendant laquelle l'efficacité du catalyseur se maintient à un niveau optimal.

Si la température du milieu réactionnel, à l'issue de l'oxydation, n'est pas susceptible de dépasser la limite supérieure de l'intervalle de températures d'oxydation, l'oxydation de l'H₂S en soufre peut être conduite de manière adiabatique. Dans le cas contraire, on évacue les calories dégagées par la réaction d'oxydation en soumettant le catalyseur à un refroidissement, par toute méthode connue, pour maintenir la température d'oxydation à la valeur choisie ou dans l'intervalle choisi. On peut par exemple, réaliser le refroidissement à l'aide d'un fluide froid circulant en échange direct de chaleur avec le catalyseur ou bien en échange indirect de chaleur avec ledit catalyseur au sein de ce dernier. On peut encore opérer en plaçant le catalyseur dans un réacteur tubulaire constitué de tubes disposés dans une calandre avec, par exemple, le catalyseur présent dans les tubes et un fluide froid circulant entre les tubes côté calandre ou vice versa. On peut également effectuer l'oxydation catalytique dans un réacteur à plusieurs étages de catalyseur avec refroidissement du milieu réactionnel entre les étages successifs par échange indirect de chaleur avec un fluide froid, l'échange de chaleur ayant lieu à l'intérieur ou à l'extérieur du réacteur d'oxydation.

Dans la mise en oeuvre de l'oxydation à des températures comprises entre 35°C et 70°C et plus particulièrement allant de 40°C à 65°C, lorsque le gaz renfermant H₂S, que l'on traite selon l'invention, est disponible à des températures supérieures à 70°C, il convient donc de le refroidir à la température choisie entre 35°C et 70°C avant de l'amener au contact du catalyseur d'oxydation de l'H₂S en soufre. Si le gaz à traiter renferme en plus d'H₂S une quantité plus ou moins importante d'eau, par exemple comprise entre 10% et 50% en volume, une fraction plus ou moins conséquente de cette eau se condensera au cours dudit refroidissement et pourra être séparée ou non du gaz à traiter refroidi avant la mise en contact de ce dernier avec le catalyseur d'oxydation

Selon un premier mode de mise en oeuvre, le refroidissement du gaz à traiter est conduit de telle sorte que le gaz refroidi ait une teneur en vapeur d'eau inférieure à environ 10% en volume, l'eau condensée étant séparée du gaz refroidi, avant la mise en contact de ce dernier avec le catalyseur d'oxydation de l'H₂S.

Selon un second mode de mise en oeuvre, l'eau condensée au cours du refroidissement du gaz à traiter n'est pas séparée du gaz refroidi et on amène une phase mixte gaz/eau condensée au contact du catalyseur d'oxydation de l'H₂S, on maintient la température dans la zone d'oxydation, à la valeur choisie entre 35°C et 70°C et plus spécialement allant de 40°C à 65°C, par injection, dans ladite zone, d'un courant d'eau refroidi circulant en continu à contre-courant du gaz à traiter, on évacue, en tête de la zone d'oxydation, un gaz épuré substantiellement exempt de composés soufrés et soutire, en fond de ladite zone, un courant d'eau chargé de particules de soufre solide, et on recycle une partie dudit courant d'eau, après séparation du soufre qu'il contient et refroidissement, pour constituer le courant d'eau de refroidissement injecté dans la zone d'oxydation.

Selon un troisième mode de mise en oeuvre, qui constitue une variante du second, l'eau condensée au cours du refroidissement du gaz à traiter n'est pas séparée du gaz refroidi et on amène une phase mixte gaz/eau condensée au contact du catalyseur d'oxydation de l'H₂S, on maintient la température dans la zone d'oxydation, à la valeur choisie entre 35°C et 70°C et plus spécialement allant de 40°C à 65°C, par injection, dans ladite zone, d'un courant d'eau refroidi circulant en continu à co-courant du gaz à traiter, on soutire, en fond de la zone d'oxydation, un mélange gaz épuré/eau condensée, chargé de particules de soufre solide, on sépare ledit mélange en un courant de gaz épuré, que l'on évacue, et une phase aqueuse et on recycle une partie de cette phase aqeuse, après séparation du soufre qu'elle contient et refroidissement, pour constituer le courant d'eau de refroidissement injecté dans la zone d'oxydation.

Le gaz de balayage, utilisé pour la régénération du catalyseur chargé de soufre, peut être tel que méthane, azote, CO₂ ou mélanges de tels gaz ou peut encore consister en une fraction du courant gazeux issu de l'étape d'oxydation ou en une fraction du gaz à traiter. Le gaz de balayage utilisé pour la régénération précitée peut éventuellement contenir une certaine proportion d'un composé réducteur gazeux tel que, par exemple, H₂, CO, ou H₂S, au moins au cours de la phase finale de la régénération, c'est-à-dire après la vaporisation de la plus grande partie du soufre déposé sur le catalyseur d'oxydation.

La mise en oeuvre de la réaction d'oxydation selon l'invention aux températures inférieures au point de rosée du soufre formé, peut être réalisée dans une zone unique d'oxydation renfermant le catalyseur d'oxydation à support de carbure de silicium, qui opère alternativement en phase d'oxydation et en phase de régénération/refroidissement. Une telle mise en oeuvre est retenue lorsque le gaz à traiter renferme peu d'H₂S et que, de ce fait, la régénération du catalyseur est peu fréquente. Avantageusement, la mise en oeuvre de la réaction catalytique est réalisée dans une pluralité de zones d'oxydation renfermant chacune le catalyseur d'oxydation à support de carbure de silicium, qui opèrent de telle sorte que l'une au moins desdites zones opère en phase de régénération/refroidissement, tandis que les autres zones sont en phase d'oxydation catalytique. On peut encore opérer en ayant une ou plusieurs zones en phase de réaction d'oxydation, au moins une zone en phase de régénération et au moins une zone en phase de refroidissement.

Le gaz utilisé pour la régénération du catalyseur d'oxydation circule de préférence en circuit fermé à partir d'une zone de chauffage, en passant successivement par la zone catalytique en cours de régénération et une zone de refroidissement, dans laquelle la majeure partie du soufre présent dans ledit gaz est séparée par condensation, pour revenir à la zone de chauffage. Bien entendu, le gaz de régénération peut également circuler en circuit ouvert.

Le gaz utilisé pour le refroidissement du catalyseur d'oxydation régénéré est du même type que celui employé pour la régénération du catalyseur chargé de soufre. Les circuits de gaz de régénération et de gaz de refroidissement peuvent être indépendants l'un de l'autre. Toutefois, selon un mode de réalisation, le circuit de gaz de régénération, défini plus haut, peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

La restauration de la phase active du catalyseur, après chaque régénération du catalyseur chargé de soufre, est réalisée par mise en contact du catalyseur régénéré, à des températures inférieures à 250°C et notamment comprises entre 30°C et 200°C et pendant une durée comprise entre 0,2 heure et 3 heures et plus spécialement entre 0,5 heure et 2 heures, avec un courant gazeux oxygéné constitué d'un gaz vecteur inerte renfermant, en volume,0,1% à 3%, plus spécialement 0,3 à 1,5%, d'oxygène et 0% à 50%, plus spécialement 0,5% à 30%, d'eau. Ladite restauration de la phase active oxysulfure du catalyseur régénéré peut être réalisée à l'issue du refroidissement du catalyseur régénéré ou au cours du refroidissement dudit catalyseur régénéré.

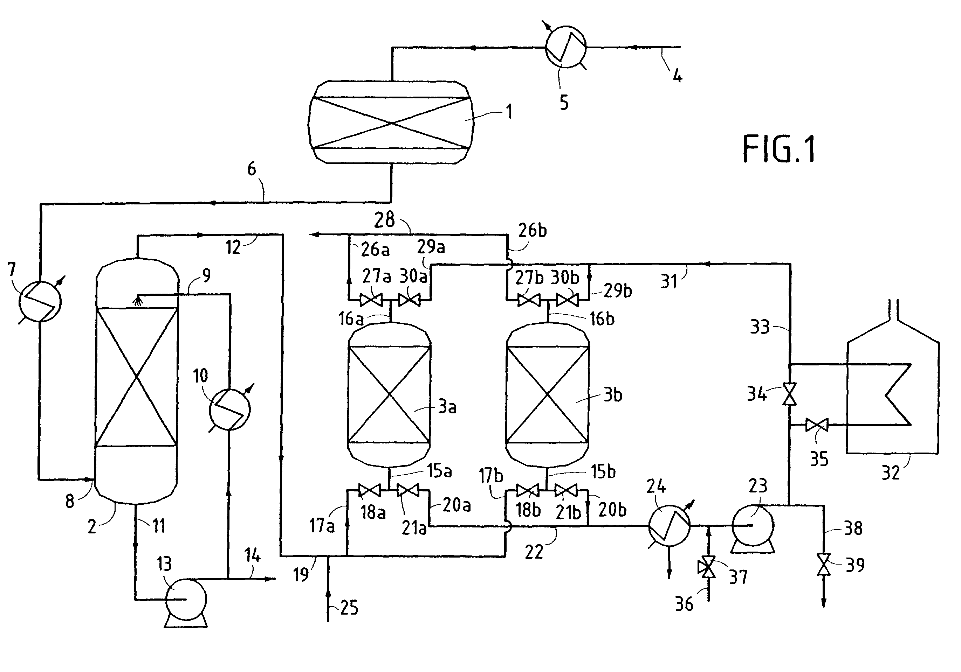

D'autres avantages et caractéristiques apparaîtront à la lecture de la description donnée ci-après de trois modes de réalisation du procédé selon l'invention, qui sont adaptés au traitement de gaz résiduaires d'usines à soufre et sont mis en oeuvre dans les dispositifs schématisés sur les figures 1 à 3 du dessin annexé, l'oxydation de l'H₂S en soufre étant réalisée à des températures comprises entre 35°C et 70°C.

La figure 1 représente un dispositif dans lequel l'oxydation de l'H₂S en soufre est mise en oeuvre dans un réacteur fonctionnant de manière adiabatique.

Les figures 2 et 3 représentent deux variantes d'un dispositif dans lequel l'oxydation de l'H₂S en soufre est mise en oeuvre dans un réacteur du type réacteur ruisselant (en anglais "trickle bed").

Sur ces figures, les éléments identiques d'une figure à l'autre sont repérés par les mêmes signes de référence.

Le dispositif représenté sur la figure 1 associe un réacteur 1 d'hydrogénation et d'hydrolyse, une tour de lavage 2 et deux réacteurs d'oxydation catalytique 3a et 3b, lesdits réacteurs d'oxydation catalytique étant montés en parallèle et renfermant chacun un lit d'un catalyseur d'oxydation de l'H₂S en soufre. Le réacteur 1 possède, d'une part, un conduit 4 d'amenée du gaz résiduaire à traiter, issu d'une usine à soufre ou d'une unité de traitement , par exemple unité SULFREEN, produisant un gaz résiduaire de composition comparable, sur lequel est intercalé un réchauffeur 5, et, d'autre part, un conduit 6 d'évacuation pour les gaz connecté, à travers un échangeur indirect de chaleur 7 fonctionnant en refroidisseur, à une entrée 8 ménagée à la partie inférieure de la tour de lavage 2. Cette tour comporte un conduit de pulvérisation d'eau 9, débouchant dans sa moitié supérieure et sur lequel est intercalé un refroidisseur 10, et elle possède en outre, en fond, un conduit 11 de soutirage de liquide et, en tête, un conduit 12 d'évacuation de gaz. Le conduit 11 est relié à l'aspiration d'une pompe 13, dont le refoulement est prolongé par un conduit 14 d'évacuation de liquide, sur lequel le conduit 9 est monté en dérivation.

Les réacteurs d'oxydation catalytique 3a et 3b sont munis d'un premier conduit, respectivement 15a et 15b, et d'un second conduit, respectivement 16a et 16b, situés de part et d'autre du lit catalytique présent dans chacun desdits réacteurs. Le conduit 15a du réacteur 3a est relié, d'une part, par un conduit 17a muni d'une vanne 18a, à un conduit 19, lui-même relié au conduit 12, et, d'autre part, par un conduit 20a muni d'une vanne 21a, à un conduit 22 connecté lui-même à l'orifice d'aspiration d'une soufflante 23 et sur lequel est monté un condenseur à soufre 24. De même, le conduit 15b du réacteur 3b est connecté ,d'une part, par un conduit 17b muni d'une vanne 18b, au conduit 19, en aval de la jonction du conduit 17a avec ledit conduit 19, et, d'autre part, par un conduit 20b pourvu d'une vanne 21b, au conduit 22 en un point de ce dernier situé entre le conduit 20a et le condenseur à soufre 24. En amont de sa connexion avec le conduit 17a, le conduit 19 porte en dérivation une tubulure 25 d'addition d'un gaz renfermant de l'oxygène libre.

Le conduit 16a du réacteur 3a est relié, d'une part, par un conduit 26a muni d'une vanne 27a, à un conduit 28 d'évacuation du gaz résiduaire épuré vers un réacteur d'incinération non représenté et de là à l'atmosphère et, d'autre part, par un conduit 29a muni d'une vanne 30a, à un conduit 31 prolongeant l'orifice de refoulement de la soufflante 23. Le conduit 31 porte un réchauffeur 32 et une dérivation 33, qui est munie d'une vanne 34 et court-circuite le réchauffeur, et il comporte également une vanne 35 entre le réchauffeur et la partie de la dérivation 33 en amont de ce dernier. De même, le conduit 16b du réacteur 3b est connecté, par un conduit 26b muni d'une vanne 27b, au conduit 28 d'évacuation du gaz résiduaire épuré et, d'autre part, par un conduit 29b muni d'une vanne 30b, au conduit 31, en un point de ce dernier situé entre la dérivation 33 et le conduit 29a. Un conduit 36 muni d'une vanne 37 à débit ajustable est monté en dérivation sur le conduit 22, entre le condenseur à soufre 24 et la soufflante 23, et constitue un conduit d'amenée d'un gaz d'appoint, tandis qu'un conduit 38 muni d'une vanne 39 à débit ajustable est monté en dérivation sur le conduit 31 entre la soufflante 23 et la jonction de la dérivation 33 avec le conduit 31 en amont de la vanne 35 et constitue un conduit de purge.

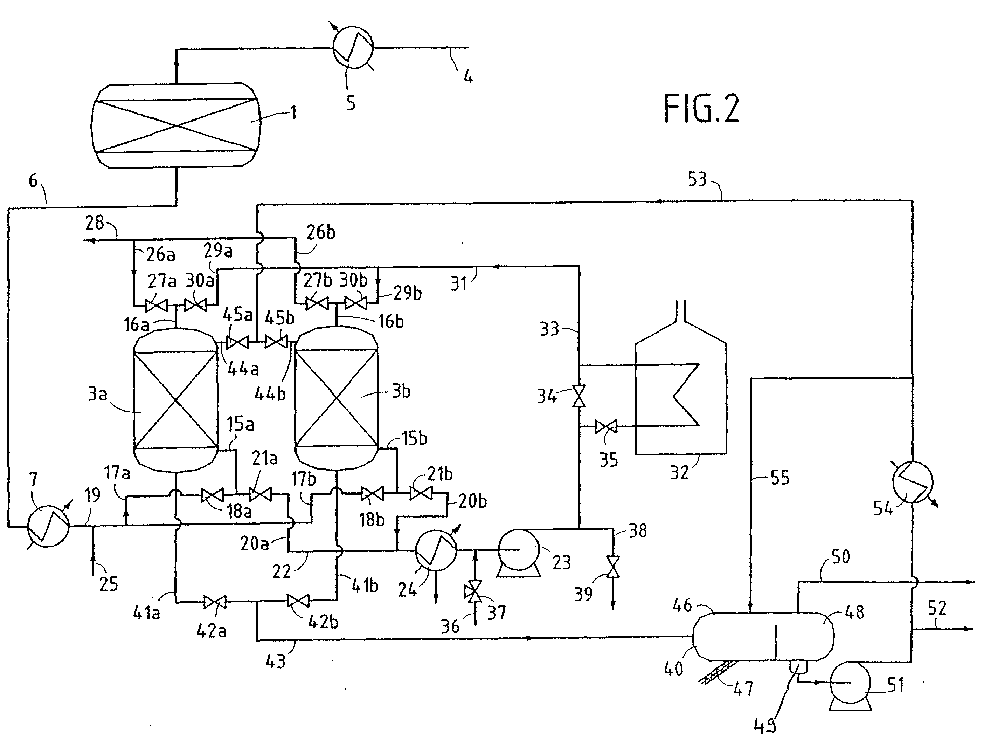

Le dispositif représenté sur la figure 2 associe un réacteur 1 d'hydrogénation et d'hydrolyse, deux réacteurs d'oxydation catalytique 3a et 3b, lesdits réacteurs d'oxydation catalytique étant montés en parallèle et renfermant chacun un lit d'un catalyseur d'oxydation de l'H₂S en soufre, et un système de refroidissement par injection d'eau comportant un ballon 40 fonctionnant en décanteur et séparateur gaz/liquide. Le réacteur 1 possède, d'une part, un conduit 4 d'amenée du gaz résiduaire à traiter, issu d'une usine à soufre ou d'une unité de traitement , par exemple unité SULFREEN, produisant un gaz résiduaire de composition comparable, sur lequel est intercalé un réchauffeur 5, et, d'autre part, un conduit 6 d'évacuation pour les gaz connecté à l'entrée d'un échangeur indirect de chaleur 7 fonctionnant en refroidisseur.

Les réacteurs d'oxydation catalytique 3a et 3b sont munis d'un premier conduit, respectivement 15a et 15b, et d'un second conduit, respectivement 16a et 16b, situés de part et d'autre du lit catalytique présent dans chacun desdits réacteurs. Le conduit 15a du réacteur 3a est relié, d'une part, par un conduit 17a muni d'une vanne 18a, à un conduit 19 relié à la sortie de l'échangeur indirect de chaleur 7, et, d'autre part, par un conduit 20a muni d'une vanne 21a, à un conduit 22 connecté lui-même à l'orifice d'aspiration d'une soufflante 23 et sur lequel est monté un condenseur à soufre 24. De même, le conduit 15b du réacteur 3b est connecté ,d'une part, par un conduit 17b muni d'une vanne 18b, au conduit 19, en aval de la jonction du conduit 17a avec ledit conduit 19, et ,d'autre part, par un conduit 20b pourvu d'une vanne 21b, au conduit 22 en un point de ce dernier situé entre le conduit 20a et le condenseur à soufre 24. En amont de sa connexion avec le conduit 17a, le conduit 19 porte en dérivation une tubulure 25 d'addition d'un gaz renfermant de l'oxygène libre.

Le conduit 16a du réacteur 3a est relié, d'une part, par un conduit 26a muni d'une vanne 27a, à un conduit 28 d'évacuation du gaz résiduaire épuré vers un réacteur d'incinération non représenté et de là à l'atmosphère et, d'autre part, par un conduit 29a muni d'une vanne 30a, à un conduit 31 prolongeant l'orifice de refoulement de la soufflante 23. Le conduit 31 porte un réchauffeur 32 et une dérivation 33, qui est munie d'une vanne 34 et court-circuite le réchauffeur, et il comporte également une vanne 35 entre le réchauffeur et la partie de la dérivation 33 en amont de ce dernier. De même, le conduit 16b du réacteur 3b est connecté, par un conduit 26b muni d'une vanne 27b, au conduit 28 d'évacuation du gaz résiduaire épuré et, d'autre part, par un conduit 29b muni d'une vanne 30b, au conduit 31, en un point de ce dernier situé entre la dérivation 33 et le conduit 29a. Un conduit 36 muni d'une vanne 37 à débit ajustable est monté en dérivation sur le conduit 22, entre le condenseur à soufre 24 et la soufflante 23, et constitue un conduit d'amenée d'un gaz d'appoint, tandis qu'un conduit 38 muni d'une vanne 39 à débit ajustable est monté en dérivation sur le conduit 31 entre la soufflante 23 et la jonction de la dérivation 33 avec le conduit 31 en amont de la vanne 35 et constitue un conduit de purge.

Les réacteurs d'oxydation catalytique 3a et 3b sont également munis, en fond, d'un conduit de soutirage, respectivement 41a et 41b, muni d'une vanne, respectivement 42a et 42b, qui est relié, par un conduit 43 d'évacuation de liquide, à l'entrée du ballon 40 décanteur et séparateur gaz/liquide et, dans leur partie supérieure, d'un conduit d'injection de liquide, respectivement 44a et 44b, muni d'une vanne, respectivement 45a et 45b. Le conduit de soutirage et le conduit d'injection de liquide équipant chacun des réacteurs d'oxydation catalytique 3a et 3b sont également situés de part et d'autre du lit catalytique présent dans le réacteur considéré. Le ballon 40 comporte une zone 46 de décantation, qui est pourvue à sa partie inférieure d'un système 47 extracteur de solides, et une zone 48 de séparation gaz/liquide, qui présente, à sa partie inférieure, une sortie 49 pour les liquides et, à sa partie supérieure, une sortie 50 pour les gaz. La sortie 49 du ballon 40 est connectée à l'aspiration d'une pompe 51, dont le refoulement est prolongé par un conduit d'évacuation de liquide 52. Un conduit 53, qui est monté en dérivation sur le conduit 52 et sur lequel est intercalé un échangeur indirect de chaleur 54 fonctionnant en refroidisseur, est connecté au conduit d'injection de liquide, respectivement 44a et 44b, dont est pourvu chacun des réacteurs d'oxydation catalytique 3a et 3b. Un conduit 55, monté en dérivation sur le conduit 53 entre l'échangeur de chaleur 54 et la jonction du conduit 53 avec les conduits 44a et 44b, relie également ledit conduit 53 à la zone de décantation 46 du ballon 40.

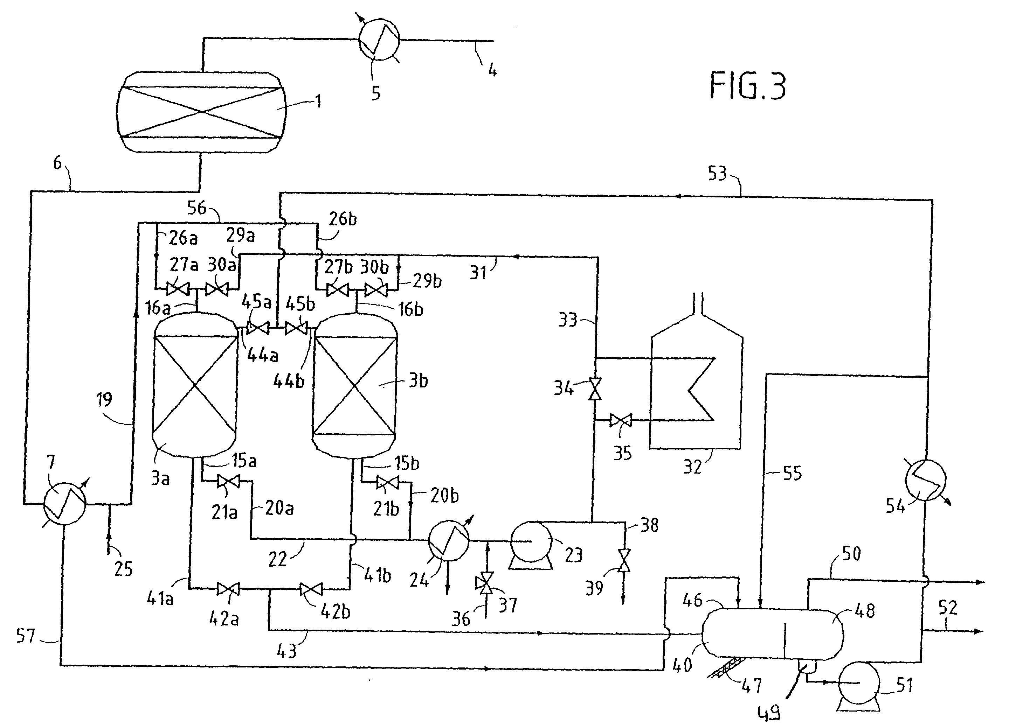

Le dispositif représenté sur la figure 3 associe un réacteur 1 d'hydrogénation et d'hydrolyse, deux réacteurs d'oxydation catalytique 3a et 3b, lesdits réacteurs d'oxydation catalytique étant montés en parallèle et renfermant chacun un lit d'un catalyseur d'oxydation de l'H₂S en soufre, et un système de refroidissement par injection d'eau comportant un ballon 40 fonctionnant en décanteur et séparateur gaz/liquide. Le réacteur 1 possède, d'une part, un conduit 4 d'amenée du gaz résiduaire à traiter, issu d'une usine à soufre ou d'une unité de traitement , par exemple unité SULFREEN, produisant un gaz résiduaire de composition comparable, sur lequel est intercalé un réchauffeur 5, et, d'autre part, un conduit 6 d'évacuation pour les gaz connecté à l'entrée d'un échangeur indirect de chaleur 7 fonctionnant en refroidisseur.

Les réacteurs d'oxydation catalytique 3a et 3b sont munis d'un premier conduit, respectivement 15a et 15b, et d'un second conduit, respectivement 16a et 16b, situés de part et d'autre du lit catalytique présent dans chacun desdits réacteurs. Le conduit 15a du réacteur 3a est relié, par un conduit 20a muni d'une vanne 21a, à un conduit 22 connecté lui-même à l'orifice d'aspiration d'une soufflante 23 et sur lequel est monté un condenseur à soufre 24. De même, le conduit 15b du réacteur 3b est connecté,par un conduit 20b pourvu d'une vanne 21b, au conduit 22 en un point de ce dernier situé entre le conduit 20a et le condenseur à soufre 24.

Le conduit 16a du réacteur 3a est relié, d'une part, par un conduit 26a muni d'une vanne 27a, à un conduit 56 d'alimentation en gaz et, d'autre part, par un conduit 29a muni d'une vanne 30a, à un conduit 31 prolongeant l'orifice de refoulement de la soufflante 23. Le conduit 31 porte un réchauffeur 32 et une dérivation 33, qui est munie d'une vanne 34 et court-circuite le réchauffeur, et il comporte également une vanne 35 entre le réchauffeur et la partie de la dérivation 33 en amont de ce dernier. De même, le conduit 16b du réacteur 3b est connecté, par un conduit 26b muni d'une vanne 27b, au conduit 56 d'alimentation en gaz et, d'autre part, par un conduit 29b muni d'une vanne 30b, au conduit 31, en un point de ce dernier situé entre la dérivation 33 et le conduit 29a. Un conduit 36 muni d'une vanne 37 à débit ajustable est monté en dérivation sur le conduit 22, entre le condenseur à soufre 24 et la soufflante 23, et constitue un conduit d'amenée d'un gaz d'appoint, tandis qu'un conduit 38 muni d'une vanne 39 à débit ajustable est monté en dérivation sur le conduit 31 entre la soufflante 23 et la jonction de la dérivation 33 avec le conduit 31 en amont de la vanne 35 et constitue un conduit de purge.

Les réacteurs d'oxydation catalytique 3a et 3b sont également munis, en fond, d'un conduit de soutirage, respectivement 41a et 41b, muni d'une vanne, respectivement 42a et 42b, qui est relié, par un conduit 43 d'évacuation de liquide, à l'entrée du ballon 40 décanteur et séparateur gaz/liquide et, dans leur partie supérieure, d'un conduit d'injection de liquide, respectivement 44a et 44b, muni d'une vanne, respectivement 45a et 45b. Le conduit de soutirage et le conduit d'injection de liquide équipant chacun des réacteurs d'oxydation catalytique 3a et 3b sont également situés de part et d'autre du lit catalytique présent dans le réacteur considéré. Le ballon 40 comporte une zone 46 de décantation, qui est pourvue à sa partie inférieure d'un système 47 extracteur de solides, et une zone 48 de séparation gaz/liquide, qui présente, à sa partie inférieure, une sortie 49 pour les liquides et, à sa partie supérieure, un conduit de sortie 50 pour l'évacuation du gaz résiduaire épuré vers un réacteur d'incinération non représenté et de là à l'atmosphère. La sortie 49 du ballon 40 est connectée à l'aspiration d'une pompe 51, dont le refoulement est prolongé par un conduit d'évacuation de liquide 52. Un conduit 53, qui est monté en dérivation sur le conduit 52 et sur lequel est intercalé un échangeur indirect de chaleur 54 fonctionnant en refroidisseur, est connecté au conduit d'injection de liquide, respectivement 44a et 44b, dont est pourvu chacun des réacteurs d'oxydation catalytique 3a et 3b. Un conduit 55, monté en dérivation sur le conduit 53 entre l'échangeur de chaleur 54 et la jonction du conduit 53 avec les conduits 44a et 44b, relie également ledit conduit 53 à la zone de décantation 46 du ballon 40. Le conduit 56 d'alimentation en gaz est connecté, par un conduit 19, à la sortie de l'échangeur de chaleur 7. En outre, ledit échangeur de chaleur possède une évacuation pour les liquides condensés, qui est reliée, par un conduit 57, à la zone de décantation 46 du ballon 40. En amont de sa connexion avec le conduit 57, le conduit 19 porte en dérivation une tubulure 25 d'addition d'un gaz renfermant de l'oxygène libre.

Le déroulement du traitement du gaz résiduaire dans les dispositifs, qui viennent d'être décrits, peut être schématisé comme suit :

En se référant au dispositif de la figure 1, on suppose que le réacteur 3a est en phase d'oxydation catalytique, tandis que le réacteur 3b est en phase de régénération, les vannes 18a, 21b, 27a, 30b et 35 étant ouvertes, tandis que les vannes 18b, 21a, 27b, 30a et 34 sont fermées.

Le gaz résiduaire, arrivant de l'usine à soufre par le conduit 4, passe dans l'échangeur de chaleur 5, où il est porté à la température requise pour l'hydrogénation, par exemple entre 200°C et 400°C. Le gaz résiduaire chaud, sortant dudit échangeur 5, passe dans le réacteur 1 d'hydrogénation et d'hydrolyse renfermant une quantité appropriée d'un catalyseur susceptible de promouvoir l'hydrogénation du SO₂ et du soufre élémentaire en H₂S ainsi que l'hydrolyse des composés COS et CS₂ en H₂S, ledit catalyseur étant par exemple à base de cobalt et de molybdène. Pour plus de détails sur la mise en oeuvre de la phase d'hydrogénation et d'hydrolyse des composés soufrés présents dans le gaz résiduaire, on peut se référer aux informations contenues dans la citation WO-A-94/21359. Dans le réacteur 1, les composés soufrés, autres que H₂S, présents dans le gaz résiduaire, sont convertis quasi complètement en H₂S. L'effluent gazeux sortant, par le conduit 6, du réacteur 1, dont la température est de l'ordre de 280°C à 450°C, passe ensuite dans l'échangeur de chaleur 7 aux fins de refroidissement, avant de pénétrer dans la tour de lavage 2 par l'orifice 8. Dans cette tour, l'effluent gazeux hydrogéné refroidi est lavé par une pulvérisation continue d'eau, effectuée par le conduit 9, pour condenser la plus grande partie de la vapeur d'eau qu'il contient. Par le conduit 11, on soutire en continu un courant d'eau ,qui est évacué par la pompe 13 et le conduit 14 vers un stockage d'eaux acides, après avoir dérivé dans le conduit 9,la fraction dudit courant d'eau qui est requise pour constituer, après refroidissement dans l'échangeur de chaleur 10, la pulvérisation d'eau introduite dans la tour de lavage. En tête de la tour de lavage 2 sort un effluent gazeux refroidi renfermant en volume moins de 10% environ de vapeur d'eau, lequel effluent, dont la température est comprise entre 35°C et 70°C, est amené au réacteur d'oxydation 3a, par les conduits 12 et 19, le conduit 17a, à travers la vanne 18a, et le conduit 15a, après avoir reçu, par le conduit 25, une quantité contrôlée de gaz renfermant de l'oxygène libre et notamment d'air pour la réalisation de l'oxydation de l'H₂S en soufre.

Dans le réacteur 3a, qui tout comme le réacteur 3b contient un catalyseur selon l'invention d'oxydation de l'H₂S en soufre, l'H₂S est oxydé sélectivement en soufre par l'oxygène au contact du catalyseur d'oxydation selon la réaction H₂S+1/2 O₂ → S +H₂O.

L'oxydation est réalisée de manière adiabatique entre 35°C et 70°C et plus spécialement dans l'intervalle 40°C à 65°C, le soufre formé par l'oxydation se déposant sur le catalyseur d'oxydation. Par le conduit 16a du réacteur 3a, sort un gaz résiduaire épuré à teneur extrêmement réduite en H₂S résiduel, qui est dirigé par le conduit 26a, à travers la vanne 27a, dans le conduit 28 d'évacuation acheminant ledit gaz résiduaire épuré vers un réacteur d'incinération thermique ou catalytique non représenté.

Un courant de gaz non oxydant de balayage est envoyé par la soufflante 23 dans le conduit 31 à travers la vanne 35 et le réchauffeur 32, dans lequel ce courant gazeux est réchauffé à la température appropriée pour la régénération, qui est généralement comprise entre 200°C et 500°C et plus spécialement entre 230°C et 400°C. Le courant de gaz réchauffé, circulant dans le conduit 31, est introduit dans le réacteur 3b par le conduit 29b, à travers la vanne 30b et le conduit 16b, et balaie le catalyseur d'oxydation chargé de soufre contenu dans ledit réacteur. Le courant de gaz de balayage, entraînant le soufre vaporisé, sort du réacteur 3b par le conduit 15b et s'écoule par le conduit 20b, à travers la vanne 21b, et le conduit 22 jusqu'au condenseur à soufre 24, dans lequel la majeure partie du soufre se sépare par condensation. A la sortie du condenseur à soufre 24, le courant de gaz de balayage est repris par la soufflante 23 pour être refoulé dans le conduit 31, comme indiqué plus haut.

Après une durée suffisante de balayage du catalyseur contenu dans le réacteur 3b par le gaz de balayage passant dans le réchauffeur 32 pour éliminer complètement le soufre déposé sur le catalyseur, on ouvre la vanne 34 et ferme la vanne 35 de manière à court-circuiter le réchauffeur 32 et à abaisser la température du gaz de balayage , et l'on poursuit le balayage pendant une durée appropriée pour refroidir le catalyseur régénéré, contenu dans le réacteur 3b, à une température convenable permettant la mise en contact du catalyseur avec le courant biphasique passant dans le conduit 19 en aval de la tubulure 25.

Au cours du refroidissement du catalyseur régénéré, lorsque la température dudit catalyseur atteint des valeurs inférieures à 250°C et plus spécialement comprises entre 30°C et 200°C, on introduit dans le gaz de balayage, par le conduit 36 à travers la vanne 37, un courant gazeux oxygéné constitué d'un gaz vecteur inerte renfermant, en volume,0,1% à 3%, plus spécialement 0,3 à 1,5%, d'oxygène et 0% à 50%, plus spécialement 0,5% à 30%, d'eau, ledit gaz ayant une température inférieures à 250°C et plus spécialement comprises entre 30°C et 200°C, et l'on maintient l'injection dudit courant gazeux oxygéné pendant une durée comprise entre 0,2 heure et 3 heures et plus spécialement entre 0,5 heure et 2 heures, de manière à restaurer la phase active oxysulfure du catalyseur d'oxydation.

Lorsque ledit catalyseur a été refroidi à la température requise et que sa phase active a été restaurée, on permute les rôles joués par les réacteurs 3a et 3b, c'est-à-dire qu'on amène le réacteur 3b en phase de réaction d'oxydation et le réacteur 3a en phase de régénération/refroidissement. Pour ce faire, on ferme les vannes 30b et 21b, puis ouvre les vannes 18b et 27b et ensuite ferme les vannes 18a et 27a, avec comme résultat la mise du réacteur 3b en phase de réaction. Enfin, on ouvre les vannes 30a et 21a pour établir la circulation du gaz chaud de régénération dans le réacteur 3a, qui opère alors en phase de régénération. Après une durée suffisante de régénération, le réacteur 3a est alors passé en phase de refroidissement avec restauration de la phase active du catalyseur comme indiqué plus haut à propos du réacteur 3b.

En se référant au dispositif de la figure 2, on suppose que le réacteur 3a est en phase d'oxydation catalytique, tandis que le réacteur 3b est en phase de régénération, les vannes 18a, 21b, 27a, 30b, 35, 42a et 45a étant ouvertes, tandis que les vannes 18b, 21a, 27b, 30a, 34, 42b et 45b sont fermées.

Le gaz résiduaire, arrivant de l'usine à soufre par le conduit 4, passe dans l'échangeur de chaleur 5, le réacteur 1 d'hydrogénation et d'hydrolyse et l'échangeur de chaleur 7, où il est traité comme indiqué en référence à la figure 1. Ledit échangeur de chaleur produit un effluent biphasique gaz/eau condensée, dont la température est comprise entre 35°C et 70°C et qui est amené au réacteur d'oxydation 3a, par le conduit 19, le conduit 17a, à travers la vanne 18a, et le conduit 15a, après avoir reçu, par le conduit 25, une quantité contrôlée de gaz renfermant de l'oxygène libre et notamment d'air pour la réalisation de l'oxydation de l'H₂S en soufre.

Un courant d'eau de refroidissement, amené par le conduit 53, est introduit en continu dans le réacteur 3a, par le conduit 44a à travers la vanne 45a, ledit courant d'eau circulant dans le réacteur 3a, à contre-courant du gaz contenu dans l'effluent biphasique injecté dans ledit réacteur par le conduit 15a, et sortant de ce réacteur, par le conduit 41a à travers la vanne 42a, chargé de particules de soufre solide, pour être introduit, par le conduit 43, dans la zone 46 de décantation du ballon 40 Dans cette zone 46, les particules de soufre solide, qui sont contenues dans le courant d'eau amené par le conduit 43, se rassemblent à la partie inférieure de ladite zone, d'où elles sont évacuées, sous la forme d'une suspension aqueuse, par le système d'extraction 47. L'eau débarrassée des particules de soufre passe alors dans la zone 48 de séparation gaz/liquide du ballon 40, dans laquelle elle est dégazée, le gaz séparé étant évacué par le conduit 50. En fond de la zone 48, un courant d'eau est soutiré en continu, par le conduit 49, et évacué, au moyen de la pompe 51,par le conduit 52 vers un stockage d'eaux acides, après avoir dérivé dans le conduit 53 un fraction dudit courant d'eau évacué La fraction d'eau ainsi dérivée est refroidie dans l'échangeur de chaleur 54 et une partie de la fraction d'eau refroidie est utilisée pour constituer le courant d'eau de refroidissement introduit dans le réacteur 3a, aux fins de contrôle de la température dans ledit réacteur, tandis que le reste de ladite fraction d'eau est retournée, par le conduit 55, dans la zone 46 du ballon 40.

Dans le réacteur 3a, qui tout comme le réacteur 3b contient un catalyseur selon l'invention pour l'oxydation de l'H₂S en soufre, l'H₂S est oxydé sélectivement en soufre par l'oxygène au contact du catalyseur d'oxydation selon la réaction H₂S+1/2 O₂ → S +H₂O.

Aux températures, maintenues entre 35°C et 70°C et plus spécialement dans l'intervalle 40°C à 65°C par l'injection d'eau précitée, qui sont utilisées pour la mise en oeuvre de l'oxydation, le soufre formé par l'oxydation se dépose sur ledit catalyseur. Par le conduit 16a du réacteur 3a, sort un gaz résiduaire épuré à teneur extrêmement réduite en H₂S résiduel, qui est dirigé par le conduit 26a, à travers la vanne 27a, dans le conduit 28 d'évacuation acheminant ledit gaz résiduaire épuré vers un réacteur d'incinération thermique ou catalytique non représenté.

Un courant de gaz non oxydant de balayage est envoyé par la soufflante 23 dans le conduit 31 à travers la vanne 35 et le réchauffeur 32, dans lequel ce courant gazeux est réchauffé à la température appropriée pour la régénération, comme indiqué en référence à la figure 1. Le courant de gaz réchauffé, circulant dans le conduit 31, est introduit dans le réacteur 3b par le conduit 29b, à travers la vanne 30b et le conduit 16b, et balaie le catalyseur d'oxydation chargé de soufre contenu dans ledit réacteur. Le courant de gaz de balayage, entraînant le soufre vaporisé, sort du réacteur 3b par le conduit 15b et s'écoule par le conduit 20b, à travers la vanne 21b, et le conduit 22 jusqu'au condenseur à soufre 24, dans lequel la majeure partie du soufre se sépare par condensation. A la sortie du condenseur à soufre 24, le courant de gaz de balayage est repris par la soufflante 23 pour être refoulé dans le conduit 31, comme indiqué plus haut.

Après une durée suffisante de balayage du catalyseur contenu dans le réacteur 3b par le gaz de balayage passant dans le réchauffeur 32 pour éliminer complètement le soufre déposé sur le catalyseur, on ouvre la vanne 34 et ferme la vanne 35 de manière à court-circuiter le réchauffeur 32 et à abaisser la température du gaz de balayage , et on poursuit le balayage pendant une durée appropriée pour refroidir le catalyseur régénéré, contenu dans le réacteur 3b, à une température convenable permettant la mise en contact du catalyseur avec le courant biphasique passant dans le conduit 19 en aval de la tubulure 25.

Au cours du refroidissement du catalyseur régénéré, lorsque la température dudit catalyseur atteint des valeurs inférieures à 250°C et plus spécialement comprises entre 30°C et 200°C, on effectue la restauration de la phase catalytique oxysulfure du catalyseur régénéré en opérant comme décrit en référence à la figure 1.

Lorsque ledit catalyseur a été refroidi à la température requise et que sa phase active a été restaurée, on permute les rôles joués par les réacteurs 3a et 3b, c'est-à-dire qu'on amène le réacteur 3b en phase de réaction d'oxydation et le réacteur 3a en phase de régénération/refroidissement. Pour ce faire, on ferme les vannes 30b et 21b, puis ouvre les vannes 18b, 27b,42b et 45b et ensuite ferme les vannes 18a,27a, 42a et 45a, avec comme résultat la mise du réacteur 3b en phase de réaction. Enfin, on ouvre les vannes 30a et 21a pour établir la circulation du gaz chaud de régénération dans le réacteur 3a, qui opère alors en phase de régénération. Après une durée suffisante de régénération, le réacteur 3a est alors passé en phase de refroidissement avec restauration de la phase active du catalyseur comme indiqué plus haut à propos du réacteur 3b.

En se référant au dispositif de la figure 3, on suppose que le réacteur 3a est en phase d'oxydation catalytique, tandis que le réacteur 3b est en phase de régénération, les vannes 21b, 27a, 30b, 35, 42a et 45a étant ouvertes, tandis que les vannes 21a, 27b, 30a, 34, 42b et 45b sont fermées.

Le gaz résiduaire, arrivant de l'usine à soufre par le conduit 4, passe dans l'échangeur de chaleur 5, le réacteur 1 d'hydrogénation et d'hydrolyse et l'échangeur de chaleur 7, où il est traité comme indiqué en référence à la figure 1. Ledit échangeur de chaleur produit de l'eau condensée, qui est amenée, par le conduit 57, dans la zone 46 de décantation du ballon 40, et un effluent biphasique gaz/eau condensée, dont la température est comprise entre 35°C et 70°C et qui est amené au réacteur d'oxydation 3a, par le conduit 19, le conduit 56, le conduit 26a, à travers la vanne 27a, et le conduit 16a, après avoir reçu, par le conduit 25, une quantité contrôlée de gaz renfermant de l'oxygène libre et notamment d'air pour la réalisation de l'oxydation de l'H₂S en soufre.

Un courant d'eau de refroidissement, amené par le conduit 53, est introduit en continu dans le réacteur 3a, par le conduit 44a à travers la vanne 45a, ledit courant d'eau circulant dans le réacteur 3a, à co-courant du gaz contenu dans l'effluent biphasique injecté dans ledit réacteur par le conduit 16a.

Dans le réacteur 3a, qui tout comme le réacteur 3b contient un catalyseur selon l'invention pour l'oxydation de l'H₂S en soufre, l'H₂S est oxydé sélectivement en soufre par l'oxygène au contact du catalyseur d'oxydation selon la réaction H₂S+1/2 O₂ → S +H₂O.

Aux températures, maintenues entre 35°C et 70°C et plus spécialement dans l'intervalle 40°C à 65°C par l'injection d'eau précitée, qui sont utilisées pour la mise en oeuvre de l'oxydation, le soufre formé par l'oxydation se dépose sur ledit catalyseur.

Un mélange biphasique eau/gaz épuré, chargé de particules de soufre solide, sort du réacteur 3a, par le conduit 41a à travers la vanne 42a, pour être introduit, par le conduit 43, dans la zone 46 de décantation du ballon 40 Dans cette zone 46, les particules de soufre solide, qui sont contenues dans le mélange biphasique eau/gaz épuré amené par le conduit 43, se rassemblent à la partie inférieure de ladite zone, d'où elles sont évacuées, sous la forme d'une suspension aqueuse, par le système d'extraction 47. Ledit mélange biphasique, débarrassé des particules de soufre, passe alors dans la zone 48 de séparation gaz/liquide du ballon 40, dans laquelle l'eau est séparée du gaz épuré, ledit gaz épuré étant alors évacué par le conduit 50 vers un réacteur d'incinération thermique ou catalytique non représenté. En fond de la zone 48, un courant d'eau est soutiré en continu, par le conduit 49, et évacué, au moyen de la pompe 51,par le conduit 52 vers un stockage d'eaux acides, après avoir dérivé dans le conduit 53 un fraction dudit courant d'eau évacué La fraction d'eau ainsi dérivée est refroidie dans l'échangeur de chaleur 54 et une partie de la fraction d'eau refroidie est utilisée pour constituer le courant d'eau de refroidissement introduit dans le réacteur 3a, aux fins de contrôle de la température dans ledit réacteur, tandis que le reste de ladite fraction d'eau est retournée, par le conduit 55, dans la zone 46 du ballon 40.

Un courant de gaz non oxydant de balayage est envoyé par la soufflante 23 dans le conduit 31 à travers la vanne 35 et le réchauffeur 32, dans lequel ce courant gazeux est réchauffé à la température appropriée pour la régénération, comme indiqué en référence à la figure 1. Le courant de gaz réchauffé, circulant dans le conduit 31, est introduit dans le réacteur 3b par le conduit 29b, à travers la vanne 30b et le conduit 16b, et balaie le catalyseur d'oxydation chargé de soufre contenu dans ledit réacteur. Le courant de gaz de balayage, entraînant le soufre vaporisé, sort du réacteur 3b par le conduit 15b et s'écoule par le conduit 20b, à travers la vanne 21b, et le conduit 22 jusqu'au condenseur à soufre 24, dans lequel la majeure partie du soufre se sépare par condensation. A la sortie du condenseur à soufre 24, le courant de gaz de balayage est repris par la soufflante 23 pour être refoulé dans le conduit 31, comme indiqué plus haut.

Après une durée suffisante de balayage du catalyseur contenu dans le réacteur 3b par le gaz de balayage passant dans le réchauffeur 32 pour éliminer complètement le soufre déposé sur le catalyseur, on ouvre la vanne 34 et ferme la vanne 35 de manière à court-circuiter le réchauffeur 32 et à abaisser la température du gaz de balayage , et on poursuit le balayage pendant une durée appropriée pour refroidir le catalyseur régénéré, contenu dans le réacteur 3b, à une température convenable permettant la mise en contact du catalyseur avec le courant biphasique passant dans le conduit 19, puis dans le conduit56, en aval de la tubulure 25.

Au cours du refroidissement du catalyseur régénéré, lorsque la température dudit catalyseur atteint des valeurs inférieures à 250°C et plus spécialement comprises entre 30°C et 200°C, on effectue la restauration de la phase catalytique oxysulfure du catalyseur régénéré en opérant comme décrit en référence à la figure 1.

Lorsque ledit catalyseur a été refroidi à la température requise et que sa phase active a été restaurée, on permute les rôles joués par les réacteurs 3a et 3b, c'est-à-dire qu'on amène le réacteur 3b en phase de réaction d'oxydation et le réacteur 3a en phase de régénération/refroidissement. Pour ce faire, on ferme les vannes 29b et 21b, puis ouvre les vannes 27b,42b et 45b et ensuite ferme les vannes 27a, 42a et 45a, avec comme résultat la mise du réacteur 3b en phase de réaction. Enfin, on ouvre les vannes 30a et 21a pour établir la circulation du gaz chaud de régénération dans le réacteur 3a, qui opère alors en phase de régénération. Après une durée suffisante de régénération, le réacteur 3a est alors passé en phase de refroidissement avec restauration de la phase active du catalyseur comme indiqué plus haut à propos du réacteur 3b.

Pour compléter la description précédente, on donne ci-après, à titre non limitatif, une série d'exemples illustrant l'invention.

### EXEMPLE 1 :

On traitait un effluent gazeux résiduaire renfermant, en volume, 0,8% d'H₂S comme seul composé soufré et obtenu par hydrogénation/hydrolyse d'un gaz résiduaire d'une usine à soufre CLAUS dans laquelle on traitait un gaz acide renfermant 70% d'H₂S en volume.

Le traitement dudit effluent gazeux était réalisé à température inférieure au point de rosée du soufre formé par l'oxydation dudit H₂S et en faisant appel à un catalyseur consistant en carbure de silicium supportant une phase active comportant du nickel sous la forme oxysulfure, ledit catalyseur ayant une surface spécifique BET de 23 m²/g et renfermant 5% de nickel en poids.

Ledit catalyseur était obtenu en opérant comme suit. On imprégnait des grains de carbure de silicium microporeux, ayant un diamètre moyen de 1 mm et présentant une surface spécifique BET de 25 m²/g, à l'aide d'une quantité appropriée de nitrate de nickel en solution aqueuse, puis séchait le produit imprégné à 100°C et calcinait le produit séché à 300°C pendant 3 heures. Le produit calciné était ensuite sulfuré par mise en contact, à une température de 300°C et pendant 1 heure, avec un courant d'azote renfermant, en volume, 0,8% d'H₂S et le produit sulfuré était enfin soumis à un traitement oxydant par mise en contact, à une température de 150°C et pendant 1 heure, avec un courant gazeux constitué, en volume, de 94,2% d'azote, 0,8% d'oxygène et 5% de vapeur d'eau, pour former le catalyseur à phase active d'oxysulfure de nickel.

Le traitement du gaz résiduaire était effectué dans une installation constituée de deux réacteurs d'oxydation catalytique montés en parallèle, chaque réacteur présentant une entrée et une sortie séparées par un lit fixe du catalyseur précité. Lesdits réacteurs étaient agencés, en outre, de telle sorte qu'alternativement l'un des réacteurs opérait en phase de réaction, c'est-à-dire avait son entrée reliée à un conduit d'amenée des gaz, sur lequel était monté un piquage d'injection d'air, et sa sortie connectée à un conduit d'évacuation des gaz, et l'autre réacteur opérait en phase de régénération/refroidissement, c'est-à-dire était disposé dans un circuit de régénération/refroidissement équipé de moyens pour assurer la circulation d'un gaz de balayage à travers le réacteur d'oxydation depuis un réchauffeur jusqu'à un condenseur à soufre et retour audit réchauffeur et pour faire circuler ensuite un gaz de refroidissement à travers le réacteur ayant subi la régénération. Une telle installation était similaire à la partie de l'installation de la figure 1 en aval du conduit 12.

L'effluent gazeux à traiter arrivait par le conduit d'amenée des gaz avec un débit de 100 kmoles/h et une température de 120°C et il était additionné, par le piquage, de 8,4 kmoles d'air ambiant. Le mélange obtenu, dans lequel le rapport molaire O₂ :H₂S était égal à 2,1 :1 (4,2 fois la stoechiométrie), pénétrait dans le réacteur en phase d'oxydation avec une température sensiblement égale à 120°C. La réaction d'oxydation dans le réacteur en phase de réaction était effectuée à 120°C en maintenant ledit réacteur à cette température par échange indirect de chaleur avec un fluide à température appropriée. Le temps de contact du mélange gazeux, passant dans le réacteur en phase de réaction, avec la couche de catalyseur contenue dans ledit réacteur était égal à 4,3 secondes. Le taux de conversion de l'H₂S dans le réacteur en phase de réaction d'oxydation, était égal à 100%. A la sortie dudit réacteur, on évacuait un courant gazeux ayant une température de 120°C et renfermant moins de 150 vpm de SO₂.

Dans le réacteur opérant en phase régénération/refroidissement, on injectait un gaz de balayage aux fins de régénération du catalyseur d'oxydation chargé de soufre, ledit gaz de balayage consistant en azote et étant injecté dans ledit réacteur avec une température d'environ 300°C et un débit égal à 1000 Nm³/h. A l'issue de la phase de régénération du catalyseur, au cours de laquelle on recueillait la totalité du soufre déposé sur le catalyseur, la température du gaz de balayage était abaissée à 120°C et l'on poursuivait le balayage avec le catalyseur refroidi jusqu'à ce que le lit de catalyseur atteigne ladite température. A ce stade, on soumettait alors le catalyseur régénéré et refroidi à un traitement oxydant consistant à faire passer, pendant une heure, au contact du catalyseur régénéré et refroidi un flux gazeux ayant un débit de 1000 Nm³/h et une température de 120°C et constitué, en volume, de 94,2% d'azote, 0,8% d'oxygène et 5% de vapeur d'eau, pour former le catalyseur à phase active d'oxysulfure d'azote renfermant, en volume, 0,5% d'oxygène et 5% de vapeur d'eau, pour reconstituer la phase oxysulfure de nickel du catalyseur.

Les réacteurs d'oxydation opéraient alternativement pendant 24 heures en phase de réaction et pendant 24 heures, dont 9 heures de refroidissement et 1 heure de traitement oxydant, en phase de régénération/refroidissement.

Le taux de conversion de l'H₂S dans le réacteur en phase de réaction d'oxydation, était égal à 100% dès le début et tout au long de chaque cycle de traitement et ce sur une période de plusieurs mois. Le courant gazeux issu du réacteur en phase de réaction d'oxydation avait une teneur en SO₂, qui restait inférieure à 150 vpm au cours de chaque cycle de traitement, et il ne renfermait pratiquement plus d'H₂S, ce qui correspond à une sélectivité en soufre du catalyseur supérieure à 98% dans chaque cycle de traitement.

### EXEMPLE 2 :

On traitait un gaz acide pauvre en H₂S, ledit gaz étant constitué, en volume, de 95,5% de CO₂, 4% d'H₂O et 0,5% d'H₂S.

Le traitement dudit gaz acide était réalisé à température inférieure au point de rosée du soufre formé par l'oxydation de l'H₂S de ce gaz acide en opérant dans une installation similaire à celle utilisée dans l'exemple 1 et en faisant appel à un catalyseur consistant en carbure de silicium supportant une phase active comportant du nickel sous la forme oxysulfure, ledit catalyseur ayant une surface spécifique BET de 22 m²/g et renfermant 3,6% de nickel en poids.

Ledit catalyseur était obtenu en opérant comme suit. On imprégnait des extrudés de carbure de silicium, ayant un diamètre moyen de 2 mm et une longueur de 4 à 6 mm et présentant une surface spécifique BET de 25 m²/g, à l'aide d'une quantité appropriée de nitrate de nickel en solution aqueuse, puis séchait le produit imprégné à 100°C et calcinait le produit séché à 300°C pendant 3 heures. Le produit calciné était ensuite sulfuré par mise en contact, à une température de 300°C et pendant 1 heure, avec un courant d'azote renfermant, en volume, 0,8% d'H₂S et le produit sulfuré était enfin mis en contact, à une température de 40°C et pendant 1 heure, avec un courant de gaz constitué, en volume, de 80,2% d'azote, 19% de vapeur d'eau et 0,8% d'oxygène, pour former le catalyseur à phase active d'oxysulfure de nickel.

L'effluent gazeux à traiter arrivait par le conduit d'amenée des gaz avec un débit de 100 kmoles/h et une température de 40°C et il était additionné, par le piquage, de 3,5 kmoles d'air ambiant. Le mélange obtenu, dans lequel le rapport molaire O₂ :H₂S était égal à 1,4 :1 (2,8 fois la stoechiométrie) , pénétrait dans le réacteur en phase d'oxydation avec une température sensiblement égale à 40°C. La réaction d'oxydation dans le réacteur en phase de réaction était effectuée à 40°C en maintenant ledit réacteur à cette température par échange indirect de chaleur avec un fluide à température appropriée. Le temps de contact du mélange gazeux, passant dans le réacteur en phase de réaction, avec la couche de catalyseur contenue dans ledit réacteur était égal à 4 secondes. Le taux de conversion de l'H₂S dans le réacteur en phase de réaction d'oxydation, était égal à 100%. A la sortie dudit réacteur, on évacuait un courant gazeux ayant une température de 120°C et exempt d'H₂S et de SO₂.

Dans le réacteur opérant en phase régénération/refroidissement, on injectait un gaz de balayage aux fins de régénération du catalyseur d'oxydation chargé de soufre, ledit gaz de balayage consistant en azote et étant injecté dans ledit réacteur avec une température d'environ 300°C et un débit égal à 1000 Nm³/h. A l'issue de la phase de régénération du catalyseur, au cours de laquelle on recueillait la totalité du soufre déposé sur le catalyseur, la température du gaz de balayage était abaissée à 40°C et l'on poursuivait le balayage avec le catalyseur refroidi jusqu'à ce que le lit de catalyseur atteigne ladite température. A ce stade, on soumettait alors le catalyseur régénéré et refroidi à un traitement oxydant consistant à faire passer, pendant une heure, au contact du catalyseur régénéré et refroidi un flux gazeux ayant une température de 40°C et constitué, en volume, de 80,2% d'azote, 19% de vapeur d'eau et 0,8% d'oxygène, pour reconstituer la phase oxysulfure de nickel du catalyseur.

Les réacteurs d'oxydation opéraient alternativement pendant 60 heures en phase de réaction et pendant 24 heures, dont 9 heures de refroidissement et 1 heure de traitement oxydant, en phase de régénération/refroidissement.

Le taux de conversion de l'H₂S dans le réacteur en phase de réaction d'oxydation, était égal à 100% dès le début et tout au long de chaque cycle de traitement et ce sur une période de plusieurs mois. Le courant gazeux issu du réacteur en phase de réaction d'oxydation, au cours de chaque cycle de traitement, était exempt d'H₂S et de SO₂, ce qui correspond à une sélectivité en soufre du catalyseur égale à 100% dans chaque cycle de traitement.

La mise en oeuvre du procédé selon l'invention décrite plus haut, dans laquelle on traite un gaz renfermant, en plus d'H₂S, une quantité plus ou moins importante d'eau, par exemple comprise entre 10% et 50% en volume, en effectuant l'oxydation catalytique, sur catalyseur de type oxysulfure, à des températures comprises entre 35°C et 70°C et plus particulièrement allant de 40°C à 65°C, avec maintien de la température dans la zone d'oxydation par injection dans ladite zone d'un courant d'eau refroidi circulant à co-courant ou à contre-courant du gaz à traiter, peut être généralisée à l'utilisation de tout catalyseur d'oxydation susceptible de promouvoir l'oxydation sélective de l'H₂S en soufre aux températures comprises entre 35°C et 70°C .

Cette mise en oeuvre généralisée peut être définie comme un procédé régénératif pour oxyder directement en soufre, par voie catalytique, l'H₂S contenu en faible concentration dans un gaz renfermant également, en volume, 10% à 50% d'eau , ledit procédé étant du type dans lequel on fait passer ledit gaz renfermant H₂S avec un gaz renfermant de l'oxygène libre, en quantité propre à fournir un rapport molaire O₂ : H₂S allant de 0,05 à 15, au contact d'un catalyseur d'oxydation sélective de l'H₂S en soufre, par exemple un catalyseur constitué d'une phase catalytiquement active associée à un support, notamment support en carbure de silicium, et consistant en un composé d'au moins un métal de transition, en opérant à des températures inférieures au point de rosée du soufre formé par l'oxydation de l'H₂S, lequel soufre se dépose sur le catalyseur, puis on soumet périodiquement le catalyseur d'oxydation chargé de soufre à une régénération par balayage à l'aide d'un gaz non oxydant, en opérant à des températures comprises entre 200°C et 500°C, pour vaporiser le soufre retenu sur le catalyseur, et ensuite on refroidit le catalyseur régénéré jusqu'à la température inférieure au point de rosée du soufre requise pour une nouvelle mise en oeuvre de l'oxydation de l'H₂S, ce refroidissement étant réalisé au moyen d'un gaz ayant une température inférieure à 180°C, et se caractérisant en ce que le gaz à traiter est amené au contact du catalyseur d'oxydation, avec une température comprise entre 35°C et 70°C et plus particulièrement allant de 40°C à 65°C, température à laquelle une fraction de l'eau contenue dans le gaz est présente sous forme condensée et le gaz à traiter se présente alors sous la forme d'une phase mixte gaz/eau condensée, et en ce que la zone d'oxydation est maintenue à une température entre 35°C et 70°C et plus particulièrement allant de 40°C à 65°C, par injection, dans ladite zone, d'un courant d'eau refroidi circulant en continu à contre-courant ou à co-courant du gaz à traiter.

Lorsque le gaz à traiter amené au contact du catalyseur d'oxydation de l'H₂S, circule à contre-courant du courant d'eau refroidi injecté dans la zone d'oxydation, on évacue, en tête de ladite zone d'oxydation, un gaz épuré substantiellement exempt de composés soufrés et soutire, en fond de cette zone, un courant d'eau chargé de particules de soufre solide, et on recycle une partie dudit courant d'eau, après séparation du soufre qu'il contient et refroidissement, pour constituer le courant d'eau de refroidissement injecté dans la zone d'oxydation.

Lorsque le gaz à traiter amené au contact du catalyseur d'oxydation de l'H₂S, circule à co-courant du courant d'eau refroidi injecté dans la zone d'oxydation, on soutire, en fond de la zone d'oxydation, un mélange gaz épuré/eau condensée, chargé de particules de soufre solide, on sépare ledit mélange en un courant de gaz épuré, que l'on évacue, et une phase aqueuse et on recycle une partie de cette phase aqueuse, après séparation du soufre qu'elle contient et refroidissement, pour constituer le courant d'eau de refroidissement injecté dans la zone d'oxydation.

Les autres conditions opératoires pour ces mises en oeuvre généralisées, telles que nature et quantité du gaz renfermant de l'oxygène libre, temps de contact du milieu réactionnel gazeux avec le catalyseur d'oxydation, conditions relatives à la régénération du catalyseur chargé de soufre et au refroidissement du catalyseur régénéré, sont celles définies précédemment dans le cas du catalyseur de type oxysulfure.

De même, la description précédente des modes de réalisation du procédé selon l'invention pour le traitement de gaz à faible teneur en H₂S et à forte teneur en eau, dans les dispositifs schématisés sur les figures 2 et 3 du dessin annexé, avec utilisation d'un catalyseur d'oxydation de l'H₂S en soufre du type oxysulfure est applicable de la même manière, lorsque le catalyseur d'oxydation sélective de l'H₂S en soufre n'est plus du type oxysulfure.

## Revendications

1. Procédé régénératif pour oxyder directement en soufre, par voie catalytique, l'H₂S contenu en faible concentration dans un gaz, ledit procédé étant du type dans lequel on fait passer ledit gaz renfermant H₂S avec un gaz renfermant de l'oxygène libre, en quantité propre à fournir un rapport molaire O₂ : H₂S allant de 0,05 à 15, au contact d'un catalyseur d'oxydation sélective de l'H₂S en soufre, qui est constitué d'une phase catalytiquement active associée à un support en carbure de silicium et consistant en un composé d'au moins un métal de transition, en opérant à des températures inférieures au point de rosée du soufre formé par l'oxydation de l'H₂S, lequel soufre se dépose sur le catalyseur, puis on soumet périodiquement le catalyseur d'oxydation chargé de soufre à une régénération par balayage à l'aide d'un gaz non oxydant, en opérant à des températures comprises entre 200°C et 500°C, pour vaporiser le soufre retenu sur le catalyseur, et ensuite on refroidit le catalyseur régénéré jusqu'à la température inférieure au point de rosée du soufre requise pour une nouvelle mise en oeuvre de l'oxydation de l'H₂S, ce refroidissement étant réalisé au moyen d'un gaz ayant une température inférieure à 180°C, et il se caractérise en ce que la phase active du catalyseur renferme au moins un oxysulfure d'au moins un métal choisi parmi nickel, fer, cobalt, cuivre, chrome, molybdène et tungstène.

2. Procédé selon la revendication 1, caractérisé en ce que la réaction d'oxydation de l'H₂S en soufre est mise en oeuvre à des températures comprises entre 30°C et 180°C.

3. Procédé selon la revendication 1, caractérisé en ce que la réaction d'oxydation de l'H₂S en soufre est effectuée à des températures comprises entre 35°C et 70°C et plus particulièrement allant de 40°C à 65°C.

4. Procédé selon la revendication 3, caractérisé en ce que le gaz renfermant H₂S est amené au contact du catalyseur d'oxydation avec une température comprise entre 35°C et 70°C et plus particulièrement entre 40°C et 65°C, ladite température étant inférieure ou égale à la température choisie pour la réaction d'oxydation de l'H₂S en soufre.

5. Procédé selon l'une des revendications 1 à 4, caractérisé en ce que le catalyseur régénéré est ensuite mis en contact, à des températures inférieures à 250°C et pendant une durée comprise entre 0,2 heure et 3 heures, avec un courant gazeux oxygéné constitué d'un gaz vecteur inerte renfermant, en volume,0,1% à 3% d'oxygène et 0% à 50% d'eau, pour restaurer la phase oxysulfure métallique du catalyseur.

6. Procédé selon l'une des revendications 1 à 5, caractérisé en ce que la phase active associée au support de carbure de silicium pour constituer le catalyseur d'oxydation consiste en au moins un oxysulfure d'un métal de transition choisi parmi nickel, cobalt, fer et cuivre.

7. Procédé selon l'une des revendications 1 à 6, caractérisé en ce que le support en carbure de silicium du catalyseur d'oxydation constitue au moins 40 % et plus particulièrement au moins 50 % en poids dudit catalyseur.

8. Procédé selon l'une des revendications 1 à 7, caractérisé en ce que la phase active du catalyseur d'oxydation, comptée en poids de métal, représente 0,1 à 20 %, plus particulièrement 0,2 à 15 % et plus spécialement 0,2 à 7 % du poids du catalyseur.

9. Procédé selon l'une des revendications 1 à 8, caractérisé en ce que la surface spécifique du catalyseur, déterminée par la méthode BET d'adsorption d'azote, prend des valeurs allant de 0,1 m²/g à 600 m²/g.

10. Procédé selon l'une des revendications 1 à 9, caractérisé en ce que le gaz renfermant de l'oxygène libre est utilisé en quantité propre à fournir un rapport molaire O_{2 :} H₂S allant de 0,1 à 10 et plus particulièrement de 0,1 à 4.

11. Procédé selon l'une des revendications 1 à 10, caractérisé en ce que les temps de contact du milieu réactionnel gazeux avec le catalyseur d'oxydation, dans les conditions normales de pression et de température, vont de 0,5 seconde à 20 secondes et de préférence de 1 seconde à 12 secondes.

12. Procédé selon l'une des revendications 1 à 11, caractérisé en ce que la régénération du catalyseur d'oxydation, chargé de soufre, est réalisée à des températures comprises entre 230°C et 450°C.

13. Procédé selon l'une des revendications 1 à 12, caractérisé en ce que la teneur en H₂S du gaz à traiter est comprise entre 0,001% et 25% en volume et va plus particulièrement de 0,01% à 20% en volume.

14. Procédé selon la revendication 3, caractérisé en ce que le gaz à traiter présente une température supérieure à 70°C et renferme, en volume, 10% à 50% d'eau et en ce que l'on refroidit ledit gaz à la température comprise entre 35°C et 70°C et plus particulièrement allant de 40°C à 65°C choisie pour l'oxydation, avant de l'amener au contact du catalyseur d'oxydation de l'H₂S en soufre, une fraction de cette eau se condensant au cours dudit refroidissement et étant séparée ou non du gaz à traiter refroidi avant la mise en contact de ce dernier avec le catalyseur d'oxydation de l'H₂S.

15. Procédé selon la revendication 14, caractérisé en ce que le refroidissement du gaz à traiter est conduit de telle sorte que le gaz refroidi ait une teneur en vapeur d'eau inférieure à environ 10% en volume, l'eau condensée étant séparée du gaz refroidi, avant la mise en contact de ce dernier avec le catalyseur d'oxydation de l'H₂S.

16. Procédé selon la revendication 14, caractérisé en ce que l'eau condensée au cours du refroidissement du gaz à traiter n'est pas séparée du gaz refroidi et on amène une phase mixte gaz/eau condensée au contact du catalyseur d'oxydation de l'H₂S, on maintient la température dans la zone d'oxydation, à la valeur choisie entre 35°C et 70°C et plus spécialement allant de 40°C à 65°C, par injection, dans ladite zone, d'un courant d'eau refroidi circulant en continu à contre-courant du gaz à traiter, on évacue, en tête de la zone d'oxydation, un gaz épuré substantiellement exempt de composés soufrés et soutire, en fond de ladite zone, un courant d'eau chargé de particules de soufre solide, et on recycle une partie dudit courant d'eau, après séparation du soufre qu'il contient et refroidissement, pour constituer le courant d'eau de refroidissement injecté dans la zone d'oxydation.

17. Procédé selon la revendication 14, caractérisé en ce que l'eau condensée au cours du refroidissement du gaz à traiter n'est pas séparée du gaz refroidi et on amène une phase mixte gaz/eau condensée au contact du catalyseur d'oxydation de l'H₂S, on maintient la température dans la zone d'oxydation, à la valeur choisie entre 35°C et 70°C et plus spécialement allant de 40°C à 65°C, par injection, dans ladite zone, d'un courant d'eau refroidi circulant en continu à co-courant du gaz à traiter, on soutire, en fond de la zone d'oxydation, un mélange gaz épuré/eau condensée, chargé de particules de soufre solide, on sépare ledit mélange en un courant de gaz épuré, que l'on évacue, et une phase aqueuse et on recycle une partie de cette phase aqueuse, après séparation du soufre qu'elle contient et refroidissement, pour constituer le courant d'eau de refroidissement injecté dans la zone d'oxydation.

18. Catalyseur pour l'oxydation sélective directe de l'H₂S en soufre, qui est constitué d'une phase catalytiquement active associée à un support en carbure de silicium et consistant en un composé d'au moins un métal de transition, ledit support représentant au moins 40 % et plus particulièrement au moins 50 % du poids dudit catalyseur, lequel catalyseur se caractérise en ce que sa phase active est formée d'au moins un oxysulfure d'au moins un métal choisi parmi nickel, fer, cobalt, cuivre, chrome, molybdène et tungstène.

19. Catalyseur selon la revendication 18, caractérisé en ce que la phase active associée au support consiste en au moins un oxysulfure d'un métal de transition choisi parmi nickel, cobalt, fer et cuivre.

20. Catalyseur selon la revendication 18 ou 19, caractérisé en ce que la phase active du catalyseur d'oxydation, comptée en poids de métal, représente 0,1 à 20%, plus particulièrement 0,2% à 15% et plus spécialement 0,2% à 7% du poids du catalyseur.

21. Catalyseur selon l'une des revendications 18 à 20, caractérisé en ce qu'il possède une surface spécifique, déterminée par la méthode BET d'adsorption d'azote, allant de 0,1 m²/g à 600 m²/g.

22. Procédé régénératif pour oxyder directement en soufre, par voie catalytique, l'H₂S contenu en faible concentration dans un gaz renfermant également, en volume, 10% à 50% d'eau , ledit procédé étant du type dans lequel on fait passer ledit gaz renfermant H₂S avec un gaz renfermant de l'oxygène libre, en quantité propre à fournir un rapport molaire O₂ : H₂S allant de 0,05 à 15, au contact d'un catalyseur d'oxydation sélective de l'H₂S en soufre, par exemple un catalyseur constitué d'une phase catalytiquement active associée à un support, notamment support en carbure de silicium, et consistant en un composé d'au moins un métal de transition, en opérant à des températures inférieures au point de rosée du soufre formé par l'oxydation de l'H₂S, lequel soufre se dépose sur le catalyseur, puis on soumet périodiquement le catalyseur d'oxydation chargé de soufre à une régénération par balayage à l'aide d'un gaz non oxydant, en opérant à des températures comprises entre 200°C et 500°C, pour vaporiser le soufre retenu sur le catalyseur, et ensuite on refroidit le catalyseur régénéré jusqu'à la température inférieure au point de rosée du soufre requise pour une nouvelle mise en oeuvre de l'oxydation de l'H₂S, ce refroidissement étant réalisé au moyen d'un gaz ayant une température inférieure à 180°C, et se caractérisant en ce que le gaz à traiter est amené au contact du catalyseur d'oxydation, avec une température comprise entre 35°C et 70°C et plus particulièrement allant de 40°C à 65°C, température à laquelle une fraction de l'eau contenue dans le gaz est présente sous forme condensée et le gaz à traiter se présente alors sous la forme d'une phase mixte gaz/eau condensée, et en ce que la zone d'oxydation est maintenue à une température entre 35°C et 70°C et plus particulièrement allant de 40°C à 65°C, par injection, dans ladite zone, d'un courant d'eau refroidi circulant en continu à contre-courant ou à co-courant du gaz à traiter.

23. Procédé selon la revendication 22, caractérisé en ce que le gaz à traiter, amené au contact du catalyseur d'oxydation de l'H₂S, circule à contre-courant du courant d'eau refroidi injecté dans la zone d'oxydation et en ce qu'on évacue, en tête de ladite zone d'oxydation, un gaz épuré substantiellement exempt de composés soufrés, on soutire, en fond de cette zone, un courant d'eau chargé de particules de soufre solide et on recycle une partie dudit courant d'eau, après séparation du soufre qu'il contient et refroidissement, pour constituer le courant d'eau de refroidissement injecté dans la zone d'oxydation.

24. Procédé selon la revendication 22, caractérisé en ce que le gaz à traiter, amené au contact du catalyseur d'oxydation de l'H₂S, circule à co-courant du courant d'eau refroidi injecté dans la zone d'oxydation et en ce qu'on soutire, en fond de la zone d'oxydation, un mélange gaz épuré/eau condensée, chargé de particules de soufre solide, on sépare ledit mélange en un courant de gaz épuré, que l'on évacue, et une phase aqueuse et on recycle une partie de cette phase aqueuse, après séparation du soufre qu'elle contient et refroidissement, pour constituer le courant d'eau de refroidissement injecté dans la zone d'oxydation.

## Patentansprüche

1. Verfahren zur Regenerierung von in geringer Konzentration in einem Gas enthaltenem H₂S auf katalytischem Weg durch direkte Oxydation in Schwefel, wobei das Verfahren vom Typ ist, in welchem ein H₂S enthaltendes Gas mit einem freien Sauerstoff enthaltenden Gas in einer für den Erhalt eines molaren Verhältnisses O₂ : H₂S von 0,05 bis 15 angebrachten Menge mit einem selektiven Oxydationskatalysator von H₂S in Schwefel in Kontakt gebracht wird, wobei der Katalysator aus einer katalytisch aktiven Phase in Verbindung mit einem Träger aus Siliziumcarbid gebildet wird und aus einer Verbindung mindestens eines Übergangmetalls besteht, wobei bei Temperaturen unterhalb des Taupunktes des durch die Oxydation von H₂S gebildeten Schwefels gearbeitet wird, Schwefel, der sich auf den Katalysator niederschlägt, und dann der mit Schwefel beladene Oxydationskatalysator regelmäßig einer Regenerierung durch Spülung mit einem nichtoxydierenden Gas bei Temperaturen zwischen 200°C und 500°C zur Verdampfung des auf dem Katalysator verbliebenen Schwefels unterzogen wird, und dann der regenerierte Katalysator auf die für die erneute Verwendung des Katalysators für die Oxydation von H₂S erforderliche Temperatur unterhalb des Taupunktes von Schwefel abgekühlt wird, wobei diese Abkühlung mittels eines eine Temperatur unterhalb von 180°C aufweisenden Gases erreicht wird, und das Verfahren dadurch gekennzeichnet ist, dass die aktive Phase des Katalysators mindestens ein Oxysulfid mindestens eines Metalls ausgewählt aus Nickel, Eisen, Kobalt, Kupfer, Chrom, Molybdän und Wolfram enthält.

2. Verfahren gemäß Anspruch 1, dadurch gekennzeichnet, dass die Oxydationsreaktion von H₂S in Schwefel bei Temperaturen zwischen 30°C und 180°C durchgeführt wird.

3. Verfahren gemäß Anspruch 1, dadurch gekennzeichnet, dass die Oxydationsreaktion von H₂S in Schwefel bei Temperaturen zwischen 35°C und 70°C und insbesondere von 40°C bis 65°C durchgeführt wird.

4. Verfahren gemäß Anspruch 3, dadurch gekennzeichnet, dass das H₂S enthaltende, mit dem Oxydationskatalysator in Kontakt gebrachte Gas eine Temperatur zwischen 35°C und 70°C, und insbesondere zwischen 40°C und 65°C aufweist, wobei diese Temperatur kleiner oder gleich der für die Oxydationsreaktion des H₂S in Schwefel gewählten Temperatur ist.

5. Verfahren gemäß mindestens einem der Ansprüche 1 bis 4, gekennzeichnet dadurch, dass der regenerierte Katalysator anschließend bei einer Temperatur unterhalb von 250°C und für eine Dauer zwischen 0,2 und 3 Stunden mit einem sauerstoffhaltigen Gasstrom in Kontakt gebracht wird, wobei der Gasstrom aus einem inerten Gasträger besteht, welcher 0,1 bis 3 Volumen-% Sauerstoff und 0 bis 50 Vol.-% Wasser enthält, und derart die Metalloxysulfidphase des Katalysators wiederhergestellt wird.

6. Verfahren gemäß mindestens einem der Ansprüche 1 bis 5, gekennzeichnet dadurch, dass die in Verbindung mit dem Träger aus Siliziumcarbid den Oxydationskatalysator bildende katalytisch aktive Phase aus mindestens einem Oxysulfid eines Übergangmetalls ausgewählt aus Nickel, Eisen, Kobalt und Kupfer besteht.

7. Verfahren gemäß mindestens einem der Ansprüche 1 bis 6, gekennzeichnet dadurch, dass der Träger aus Siliziumcarbid des Oxydationskatalysators mindestens 40 Gew.-% und insbesondere mindestens. 50 Gew. -% des Katalysators ausmacht.

8. Verfahren gemäß mindestens einem der Ansprüche 1 bis 7, gekennzeichnet dadurch, dass die katalytisch aktive Phase des Oxydationskatalysators, in Metallgewicht gerechnet, 0,1 bis 20%, vorzugsweise 0,2 bis 15% und insbesondere 0,2 bis 7% des Katalysatorgewichts ausmacht.

9. Verfahren gemäß mindestens einem der Ansprüche 1 bis 8, gekennzeichnet dadurch, dass die über die BET Stickstoffadsorptionsmethode bestimmte spezifische Oberfläche des Katalysators Werte von 0,1 m²/g bis 600 m²/g annimmt.

10. Verfahren gemäß mindestens einem der Ansprüche 1 bis 9, gekennzeichnet dadurch, dass das freien Sauerstoff enthaltende Gas in einer für den Erhalt eines molaren Verhältnisses O₂ : H₂S von 0,1 bis 10 und insbesondere 0,1 bis 4 Menge verwendet wird.

11. Verfahren gemäß mindestens einem der Ansprüche 1 bis 10, gekennzeichnet dadurch, dass die Kontaktzeiten des gasförmigen Reaktionsmilieus mit dem Oxydationskatalysator, unter normalen Druck- und Temperaturbedingungen, 0,5 Sekunde bis 20 Sekunden, vorzugsweise 1 Sekunde bis 12 Sekunden ausmachen.

12. Verfahren gemäß mindestens einem der Ansprüche 1 bis 11, gekennzeichnet dadurch, dass die Regenerierung des mit Schwefel beladenen Oxydationskatalysators bei Temperaturen zwischen 230°C und 450°C durchgeführt wird.

13. Verfahren gemäß mindestens einem der Ansprüche 1 bis 12, gekennzeichnet dadurch, dass der Gehalt an H₂S des zu behandelnden Gases zwischen 0,001 und 25 Vol.-% und vorzugsweise 0,01 bis 20 Vol.-% beträgt.

14. Verfahren gemäß Anspruch 3, gekennzeichnet dadurch, dass das zu behandelnde Gas eine Temperatur oberhalb von 70°C aufweist und 10 bis 50 Vol.-% Wasser enthält und dass dieses Gas auf die für die Oxydationsreaktion ausgewählte Temperatur zwischen 35°C und 70°C und vorzugsweise von 40°C bis 65°C abgekühlt wird, bevor es in Kontakt mit dem Oxydationskatalysator von H₂S in Schwefel gebracht wird, wobei ein Teil des Wassers während der Abkühlung kondensiert und von dem abgekühlten zu behandelnden Gas abgetrennt wird oder nicht, bevor dieses mit dem Oxydationskatalysator von H₂S in Kontakt gebracht wird.

15. Verfahren gemäß Anspruch 14, gekennzeichnet dadurch, dass die Abkühlung des zu behandelnden Gases derart geführt wird, dass das abgekühlte Gas einen Wasserdampfgehalt von weniger als 10 Vol.-% aufweist, wobei das kondensierte Wasser vom abgekühlten Gas abgetrennt wird bevor das Gas mit dem Oxydationskatalysator von H₂S in Kontakt gebracht wird.

16. Verfahren gemäß Anspruch 14, gekennzeichnet dadurch, dass das kondensierte Wasser während der Abkühlung des zu behandelnden Gases nicht vom abgekühlten Gas abgetrennt wird und eine gemischte Phase Gas/kondensiertes Wasser mit dem Oxydationskatalysator von H₂S in Kontakt gebracht wird, die Temperatur im Oxydationsbereich auf den gewählten Wert zwischen 35°C und 70°C und insbesondere 40°C bis 65°C durch Injektion in diesen Bereich eines bezüglich des zu behandelnden Gasstroms gegenläufig zirkulierenden kalten Wasserstroms konstant gehalten wird, dass am Kopf des Oxydationsbereichs ein im wesentlichen von schwefelhaltigen Verbindungen gereinigtes Gas und am Fuß dieses Bereichs ein mit festen Schwefelpartikeln beladener Wasserstrom abgezogen werden, und ein Teil dieses Wasserstroms nach Abtrennung des in ihm enthaltenen Schwefels und Abkühlung als Kühlwasserstrom für die Injektion in den Oxydationsbereich wiederverwendet wird.

17. Verfahren gemäß Anspruch 14, gekennzeichnet dadurch, dass das kondensierte Wasser während der Abkühlung des zu behandelnden Gases nicht vom abgekühlten Gas abgetrennt wird und eine gemischte Phase Gas/ Kondenswasser mit dem Oxydationskatalysator von H₂S in Kontakt gebracht wird, die Temperatur im Oxydationsbereich auf den gewählten Wert zwischen 35°C und 70°C und insbesondere 40°C bis 65°C durch Injektion in diesen Bereich eines bezüglich des zu behandelnden Gasstroms gleichlaufend zirkulierenden kalten Wasserstroms konstant gehalten wird, dass am Fuß des Oxydationsbereichs ein mit festen Schwefelpartikeln beladenes Gemisch gereinigtes Gas / Kondenswasser abgezogen wird, dieses Gemisch in einen Strom von gereinigtem Gas, welches abgeführt wird, und eine wässrige Phase aufgetrennt wird, wobei ein Teil dieser wässrigen Phase nach Abtrennung des in ihr enthaltenen Schwefels und Abkühlung als Kühlwasserstrom für die Injektion in den Oxydationsbereich wiederverwendet wird.

18. Katalysator für die selektive direkte Oxydation von H₂S in Schwefel, bestehend aus einer katalytisch aktiven Phase in Verbindung mit einem Träger aus Siliziumcarbid, wobei die katalytische Phase aus einer Verbindung mindestens eines Übergangmetalls besteht, und der Träger mindestens 40% und insbesondere mindestens 50% des Gewichts des Katalysators ausmacht, und der Katalysator dadurch gekennzeichnet ist, dass seine aktive Phase aus mindestens einem Oxysulfid mindestens eines Metalls ausgewählt aus Nickel, Eisen, Kobalt, Kupfer, Chrom, Molybdän und Wolfram besteht.

19. Katalysator gemäß Anspruch 18, dadurch gekennzeichnet, dass die aktive Phase in Verbindung mit dem Träger aus mindestens einem Oxysulfid eines Übergangmetalls ausgewählt aus Nickel, Eisen, Kobalt und Kupfer besteht.

20. Katalysator gemäß Anspruch 18 oder 19, dadurch gekennzeichnet, dass die aktive Phase des Oxydationskatalysators, in Metallgewicht gerechnet, 0,1 bis 20%, vorzugsweise 0,2 bis 15% und insbesondere 0,2 bis 7% des Katalysatorgewichts ausmacht.

21. Katalysator gemäß mindestens einem der Ansprüche 18 bis 20, dadurch gekennzeichnet, dass die über die BET Stickstoffadsorptionsmethode bestimmte spezifische Oberfläche des Katalysators Werte von 0,1 m²/g bis 600 m²/g annimmt.

22. Regenerierungsverfahren für die direkte katalytische Oxydation in Schwefel von in geringer Konzentration in einem Gas enthaltenem H₂S, wobei das Gas ebenfalls 10 bis 50 Vol.-% Wasser enthält, wobei das Verfahren vom Typ ist, in welchem das H₂S enthaltendes Gas mit einem freien Sauerstoff enthaltenden Gas in einer für den Erhalt eines molaren Verhältnisses O₂ : H₂S von 0,05 bis 15 angebrachten Menge mit einem selektiven Oxydationskatalysator von H₂S in Schwefel in Kontakt gebracht wird, zum Beispiel einem Katalysator aus einer katalytisch aktiven Phase in Verbindung mit einem Träger, insbesondere aus Siliziumcarbid, gebildet wird und aus einer Verbindung mindestens eines Übergangmetalls besteht, wobei bei Temperaturen unterhalb des Taupunktes des durch die Oxydation von H₂S gebildeten Schwefels gearbeitet wird, Schwefel, der sich auf den Katalysator niederschlägt, und dann der mit Schwefel beladene Oxydationskatalysator regelmäßig einer Regenerierung durch Spülung mit einem nichtoxydierenden Gas bei Temperaturen zwischen 200°C und 500°C zur Verdampfung des auf dem Katalysator verbliebenen Schwefels unterzogen wird, und dann der regenerierte Katalysator auf die für die erneute Verwendung des Katalysators für die Oxydation von H₂S erforderliche Temperatur unterhalb des Taupunktes von Schwefel abgekühlt wird, wobei diese Abkühlung mittels eines eine Temperatur unterhalb von 180°C aufweisenden Gases erreicht wird, und das Verfahren dadurch gekennzeichnet ist, dass das zu behandelnde und mit dem Oxydationskatalysator in Kontakt gebrachte Gas eine Temperatur zwischen 35°C und 70°C und insbesondere von 40°C bis 65°C aufweist, Temperatur bei welcher ein Teil des im Gas enthaltenden Wassers in kondensierter Form vorliegt und das zu behandelnde Gas in Form einer Mischphase Gas/ Kondenswasser vorliegt, und dadurch, dass der Oxydationsbereich durch Injektion in diesen Bereich eines abgekühlten, kontinuierlich gleich- oder gegenläufig mit dem zu behandelnden Gas zirkulierenden Wasserstroms auf eine Temperatur zwischen 35°C und 70°C, und insbesondere 40°C bis 65°C gehalten wird.

23. Verfahren gemäß Anspruch 22, gekennzeichnet dadurch, dass das zu behandelnde und mit dem Oxydationskatalysator von H₂S in Kontakt gebrachte Gas mit dem in den Oxydationsbereich injizierte abgekühlten Wasserstrom gegenläufig zirkuliert und dass am Kopf des Oxydationsbereichs ein im wesentlichen von schwefelhaltigen Verbindungen gereinigtes Gas und am Fuß dieses Bereichs ein mit festen Schwefelpartikeln beladener Wasserstrom abgezogen werden, und ein Teil dieses Wasserstroms nach Abtrennung des in ihm enthaltenen Schwefels und Abkühlung als Kühlwasserstrom für die Injektion in den Oxydationsbereich wiederverwendet wird.

24. Verfahren gemäß Anspruch 22, gekennzeichnet dadurch, dass das zu behandelnde und mit dem Oxydationskatalysator von H₂S in Kontakt gebrachte Gas mit dem in den Oxydationsbereich injizierte abgekühlten Wasserstrom gleichläufig zirkuliert und dass am Fuß des Oxydationsbereichs ein mit festen Schwefelpartikeln beladenes Gemisch gereinigtes Gas / Kondenswasser abgezogen werden, dieses Gemisch in einen Strom von gereinigtem Gas, welches abgeführt wird, und eine wässrige Phase aufgetrennt wird, wobei ein Teil dieser wässrigen Phase nach Abtrennung des in ihr enthaltenen Schwefels und Abkühlung als Kühlwasserstrom für die Injektion in den Oxydationsbereich wiederverwendet wird.

## Claims

1. Regenerative process for oxidizing, by a catalytic route, the H₂S contained in low concentration in a gas directly to sulphur, the said process being of the type in which the said H₂S-containing gas with a gas containing free oxygen in a suitable amount so as to give an O₂/H₂S molar ratio ranging from 0.05 to 15, is made to come into contact with a catalyst for the selective oxidation of H₂S to sulphur, which consists of a catalytically active phase combined with a silicon carbide support and consisting of a compound of at least one transition metal, the process being carried out at temperatures below the dew point of the sulphur formed by the oxidation of the H₂S, which sulphur is deposited on the catalyst, the sulphur-laden oxidation catalyst is then periodically regenerated by flushing using a non-oxidizing gas, the process being carried out at temperatures of between 200°C and 500°C in order to vaporize the sulphur retained on the catalyst, and thereafter the regenerated catalyst is cooled down, below the dew point of the sulphur, to the temperature required for the H₂S oxidation to be carried out again, this cooling being carried out by means of a gas having a temperature of less than 180°C, and it is characterized in that the active phase of the catalyst contains at least one oxysulphide of at least one metal chosen from nickel, iron, cobalt, copper, chromium, molybdenum and tungsten.

2. Process according to Claim 1, characterized in that the H₂S-to-sulphur oxidation reaction is carried out at temperatures of between 30°C and 180°C.

3. Process according to Claim 1, characterized in that the H₂S-to-sulphur oxidation reaction is carried out at temperatures of between 35°C and 70°C and more particularly at temperatures ranging from 40°C to 65°C.

4. Process according to Claim 3, characterized in that the H₂S-containing gas is brought into contact with the oxidation catalyst at a temperature of between 35°C and 70°C and more particularly of between 40°C and 65°C, the said temperature being less than or equal to the temperature chosen for the H₂S-to-sulphur oxidation reaction.

5. Process according to one of Claims 1 to 4, characterized in that the regenerated catalyst is then brought into contact, at temperatures of less than 250°C and for a time of between 0.2 and 3 hours, with an oxygenated gas stream consisting of an inert carrier gas containing 0.1% to 3% oxygen and 0% to 50% water by volume, in order to restore the metal oxysulphide phase of the catalyst.

6. Process according to one of Claims 1 to 5, characterized in that the active phase associated with the silicon carbide support in order to constitute the oxidation catalyst consists of at least one oxysulphide of a transition metal chosen from nickel, cobalt, iron and copper.

7. Process according to one of Claims 1 to 6, characterized in that the silicon carbide support of the oxidation catalyst forms at least 40% and more particularly at least 50% by weight of the said catalyst.

8. Process according to one of Claims 1 to 7, characterized in that the active phase of the oxidation catalyst represents, in terms of weight of metal, 0.1 to 20%, more particularly 0.2 to 15% and more especially 0.2 to 7% of the weight of the catalyst.

9. Process according to one of Claims 1 to 8, characterized in that the specific surface area of the catalyst, determined by the BET nitrogen adsorption method, assumes values ranging from 0.1 m²/g to 600 m²/g.

10. Process according to one of Claims 1 to 9, characterized in that the gas containing free oxygen is used in an amount suitable for providing an O₂/H₂S molar ratio ranging from 0.1 to 10 and more particularly from 0.1 to 4.

11. Process according to one of Claims 1 to 10, characterized in that the times during which the gaseous reaction mixture is in contact with the oxidation catalyst, under standard temperature and pressure conditions, range from 0.5 to 20 seconds and preferably from 1 to 12 seconds.

12. Process according to one of Claims 1 to 11, characterized in that the regeneration of the sulphur-laden oxidation catalyst is carried out at temperatures of between 230 and 450°C.

13. Process according to one of Claims 1 to 12, characterized in that the H₂S content of the gas to be treated is between 0.001% and 25% by volume and ranges more particularly from 0.01% to 20% by volume.

14. Process according to Claim 3, characterized in that the gas to be treated has a temperature greater than 70°C and contains 10% to 50% water by volume and in that the said gas is cooled to the temperature chosen for the oxidation, this being between 35°C and 70°C and more particularly ranging from 40°C to 65°C, before it is brought into contact with the H₂S-to-sulphur oxidation catalyst, a fraction of this water condensing during the said cooling and being or not being separated from the cooled gas to be treated before the latter is brought into contact with the H₂S oxidation catalyst.

15. Process according to Claim 14, characterized in that the cooling of the gas to be treated is carried out in such a way that the cooled gas has a water-vapour content of less than approximately 10% by volume, the condensed water being separated from the cooled gas before the latter is brought into contact with the H₂S oxidation catalyst.

16. Process according to Claim 14, characterized in that the water condensed during the cooling of the gas to be treated is not separated from the cooled gas and a gas/condensed water mixed phase is brought into contact with the H₂S oxidation catalyst, the temperature in the oxidation zone is maintained at the value chosen between 35°C and 70°C and more especially ranging from 40°C to 65°C by injecting, into the said zone, a stream of cooled water circulating continuously as a countercurrent with respect to the gas to be treated, a purified gas substantially free of sulphur compounds is discharged from the top of the oxidation zone and a stream of water laden with solid sulphur particles is withdrawn from the bottom of the said zone, and a portion of the said stream of water is recycled, after separating the sulphur that it contains and cooling, in order to form the stream of cooling water injected into the oxidation zone.

17. Process according to Claim 14, characterized in that the water condensed during the cooling of the gas to be treated is not separated from the cooled gas and a gas/condensed water mixed phase is brought into contact with the H₂S oxidation catalyst, the temperature in the oxidation zone is maintained at the value chosen between 35°C and 70°C and more especially ranging from 40°C to 65°C by injecting, into the said zone, a stream of cooled water circulating continuously as a cocurrent with respect to the gas to be treated, a purified gas/condensed water mixture, laden with solid sulphur particles, is withdrawn from the bottom of the oxidation zone, the said mixture is separated into a stream of purified gas, which is discharged, and an aqueous phase and a portion of this aqueous phase, after separating the sulphur that it contains and cooling, is recycled in order to form the stream of cooling water injected into the oxidation zone.

18. Catalyst for the direct selective oxidation of H₂S to sulphur, which consists of a catalytically active phase combined with a silicon carbide support and consisting of a compound of at least one transition metal, the said support representing at least 40% and more particularly at least 50% of the weight of the said catalyst, which catalyst is characterized in that its active phase is formed from at least one oxysulphide of at least one metal chosen from nickel, iron, cobalt, copper, chromium, molybdenum and tungsten.

19. Catalyst according to Claim 18, characterized in that the active phase combined with the support consists of at least one oxysulphide of a transition metal chosen from nickel, cobalt, iron and copper.

20. Catalyst according to Claim 18 or 19, characterized in that the active phase of the oxidation catalyst represents, in terms of weight of metal, 0.1 to 20%, more particularly 0.2 to 15% and more especially 0.2 to 7% by weight of the catalyst.

21. Catalyst according to one of Claims 18 to 20, characterized in that it has a specific surface area, determined by the BET nitrogen adsorption method, ranging from 0.1 m²/g to 600 m²/g.

22. Regenerative process for oxidizing, by a catalytic route, the H₂S contained in low concentration in a gas which also contains 10% to 50% water by volume directly to sulphur, the said process being of the type in which the said H₂S-containing gas with a gas containing free oxygen in a suitable amount so as to give an O₂/H₂S molar ratio ranging from 0.05 to 15, is made to come into contact with a catalyst for the selective oxidation of H₂S to sulphur, for example a catalyst consisting of a catalytically active phase combined with a support, especially a silicon carbide support, and consisting of a compound of at least one transition metal, the process being carried out at temperatures below the dew point of the sulphur formed by the oxidation of the H₂S, which sulphur is deposited on the catalyst, the sulphur-laden oxidation catalyst is then periodically regenerated by flushing using a non-oxidizing gas, the process being carried out at temperatures of between 200°C and 500°C in order to vaporize the sulphur retained on the catalyst, and thereafter the regenerated catalyst is cooled down, below the dew point of the sulphur, to the temperature required for the H₂S oxidation to be carried out again, this cooling being carried out by means of a gas having a temperature of less than 180°C, and being characterized in that the gas to be treated is brought into contact with the oxidation catalyst at a temperature of between 35°C and 70°C and more particularly ranging from 40°C to 65°C, at which temperature a fraction of the water contained in the gas is present in condensed form and the gas to be treated is then in the form of a gas/condensed water mixed phase, and in that the oxidation zone is maintained at a temperature of between 35°C and 70°C and more particularly ranging from 40°C to 65°C by injecting, into the said zone, a stream of cooled water circulating continuously as a countercurrent or as a cocurrent with respect to the gas to be treated.

23. Process according to Claim 22, characterized in that the gas to be treated, brought into contact with the H₂S oxidation catalyst, circulates as a countercurrent with respect to the stream of cooled water injected into the oxidation zone and in that a purified gas substantially free of sulphur compounds is discharged from the top of the said oxidation zone and a stream of water laden with solid sulphur particles is withdrawn from the bottom of this zone, and a portion of the said stream of water, after separating the sulphur that it contains and cooling, is recycled in order to form the stream of cooling water injected into the oxidation zone.

24. Process according to Claim 22, characterized in that the gas to be treated, brought into contact with the H₂S oxidation catalyst, circulates as a cocurrent with respect to the stream of cooled water injected into the oxidation zone- and in that a purified gas/condensed water mixture, laden with solid sulphur particles, is withdrawn from the bottom of the oxidation zone, the said mixture is separated from a stream of purified gas, which is discharged, and an aqueous phase, and a portion of this aqueous phase, after separating the sulphur that it contains and cooling, is recycled in order to form the stream of cooling water injected into the oxidation zone.
